# EUROPEAN PATENT APPLICATION

(11) **EP 4 378 964 A1**
(43) Date of publication of application: **05.06.2024**
(21) Application number: 23210550.2
(22) Date of filing: 17.11.2023
(51) Int. Cl.: C08F 2/48, C08F 2/50, H01G 11/52, H01G 11/86, H01M 4/139, H01M 10/0525, H01M 50/46, H01M 10/04

(54) **ELECTRODE FORMING APPARATUS, RESIN STRUCTURE BODY MANUFACTURING APPARATUS, ELECTRODE FORMING METHOD, AND RESIN STRUCTURE BODY MANUFACTURING METHOD**

(30) Priority: 30.11.2022 JP 2022192308
(71) Applicant: Ricoh Company, Ltd., Tokyo 143-8555 (JP)
(72) Inventor: YAMADA, Masafumi, Tokyo, 143-8555 (JP); OHKIMOTO, Miku, Tokyo, 143-8555 (JP); TAKAUJI, Keigo, Tokyo, 143-8555 (JP); NOSE, Daisuke, Tokyo, 143-8555 (JP); SUGIHARA, Naoki Ns, Tokyo, 143-8555 (JP)
(74) Representative: SSM Sandmair

(57) **Abstract**

An electrode forming apparatus (100; 100a) is provided that includes: a first chamber (11) including a first opening (111) and a second opening (112), gas present in the first chamber (11) being replaceable with a first gas (S1); a first gas supply unit (12) to supply the first gas (S1) into the first chamber (11); a conveyance unit (13) to convey a base material (7) to insert the base material (7) into the first chamber (11) via the first opening (111) and remove the base material (7) from the first chamber (11) via the second opening (112); a second chamber (14) on a downstream side of the first chamber (11) in a conveyance direction in which the base material (7) is conveyed by the conveyance unit (13); and a second gas supply unit (15) to supply a second gas (S2) into the second chamber(14).

## Description

### BACKGROUND

### Technical Field

The present disclosure relates to an electrode forming apparatus, a resin structure body manufacturing apparatus, an electrode forming method, and a resin structure body manufacturing method.

### Related Art

Conventionally, a known electrode manufacturing apparatus includes a gas replacement module including a first chamber and gas present in the first chamber can be replaced with a first gas. Such a gas replacement module is used in applications such as reducing oxygen inhibition during curing by performing a curing step using active energy rays inside a first chamber enclosing a first gas (Japanese Unexamined Patent Application Publication No. 2020-070362).

Further, to reduce entrained air, which is a gas flowing in a surface modification chamber together with a continuously conveyed base material having a strip shape, a disclosed gas replacement module includes a surface modification apparatus including a surface modification chamber having a vacuum ultraviolet light irradiation unit, and an entrained air removal chamber adjacent to the surface modification chamber and having an entrained air removal unit (see, for example, WO 2012/026482). In such a surface modification apparatus, the entrained air removal unit controls the pressure in the entrained air removal chamber to be higher or lower than the pressure in the surface modification chamber.

However, in the apparatus described in WO 2012/026482, a second gas is supplied to a first chamber to control the internal pressure of the first chamber, such as an air surface modification chamber, and the internal pressure of a second chamber, such as an entrained air removal chamber. Therefore, to reduce the amount of gas other than a first gas present in the first chamber, it is desirable to match the type of the second gas with the type of the first gas, and thus, the options for the second gas are limited.

### SUMMARY

An object of the present invention is to provide a technique by which the options for a gas used to reduce the amount of air flowing into a first chamber can be widened.

An electrode forming apparatus according to an embodiment of the present invention includes: a first chamber including a first opening and a second opening, gas present in the first chamber being replaceable with a first gas; a first gas supply unit to supply the first gas into the first chamber; a conveyance unit to convey a base material to insert the base material into the first chamber via the first opening and remove the base material from the first chamber via the second opening; a second chamber on a downstream side of the first chamber in a conveyance direction in which the base material is conveyed by the conveyance unit; and a second gas supply unit to supply a second gas into the second chamber, in which an internal pressure of the second chamber is equal to or higher than atmospheric pressure and equal to or lower than an internal pressure of the first chamber.

A resin structure body manufacturing apparatus according to an embodiment of the present invention includes a gas replacement module, an application unit to apply a liquid composition including a polymerizable compound onto the base material, and an irradiation unit to irradiate, with active energy rays, the liquid composition applied onto the base material by the application unit, the gas replacement module includes a first chamber including a first opening and a second opening, gas present in the first chamber being replaceable with a first gas, a first gas supply unit to supply the first gas into the first chamber, a second chamber on a downstream side of the first chamber in a conveyance direction in which the base material is conveyed by a conveyance unit to be inserted into the first chamber via the first opening and removed from the first chamber via the second opening, and a second gas supply unit to supply a second gas into the second chamber, in which an internal pressure of the second chamber is equal to or higher than atmospheric pressure and equal to or lower than an internal pressure of the first chamber, and after the application unit applies the liquid composition, the irradiation unit irradiates, with active energy rays, the liquid composition on the base material being conveyed in the first chamber, to form a resin structure body.

An electrode forming method according to an embodiment of the present invention includes: supplying a first gas by a first gas supply unit into a first chamber including a first opening and a second opening, gas present in the first chamber being replaceable with the first gas; conveying, by a conveyance unit, a base material to insert the base material into the first chamber via the first opening and remove the base material from the first chamber via the second opening; and supplying, by a second gas supply unit, a second gas into a second chamber, the second chamber on a downstream side of the first chamber in a conveyance direction in which the base material is conveyed by the conveyance unit, in which an internal pressure of the second chamber is equal to or higher than atmospheric pressure and equal to or lower than an internal pressure of the first chamber.

According to embodiments of the present invention, it is possible to provide a technique by which the options for the gas used to reduce the amount of air flowing into the first chamber can be widened.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of an electrode manufacturing apparatus according to an embodiment of the present invention;
FIG. 2 is a bottom view of an application unit according to an embodiment of the present invention;
FIG. 3 is a top view of a gas replacement module according to a first embodiment of the present invention;
FIG. 4 is a cross-sectional view taken along line IV-IV in FIG. 3;
FIG. 5 is a block diagram illustrating a hardware configuration of a control unit according to an embodiment of the present invention;
FIG. 6 is a block diagram illustrating a functional configuration of a control unit according to an embodiment of the present invention;
FIG. 7 is a first graph illustrating a relationship between a base material conveyance speed and a first gas outflow amount;
FIG. 8 is a second graph illustrating a relationship between a base material conveyance speed and a first gas outflow amount;
FIG. 9 is a graph illustrating internal pressures in a first chamber and a second chamber in the state of FIG. 8;
FIG. 10 is a graph illustrating a relationship between an internal pressure of a second chamber and an oxygen concentration of a first chamber;
FIG. 11 is a graph illustrating a relationship between a base material conveyance speed and an internal pressure of a second chamber;
FIG. 12 is a top view of a gas replacement module according to a second embodiment of the present invention;
FIG. 13 is a schematic diagram illustrating an electrode forming apparatus for implementing an electrode forming method according to an embodiment of the present invention;
FIG. 14 is a schematic diagram illustrating a modification of the electrode forming apparatus of FIG. 13 further including an additional printing portion;
FIG. 15 is a schematic diagram illustrating an application unit for use in an electrode forming apparatus for implementing an electrode forming method according to an embodiment of the present invention;
FIG. 16 is a schematic diagram illustrating an application unit for use in an electrode forming apparatus for implementing an electrode forming method according to an embodiment of the present invention;
FIG. 17 is a diagram illustrating a liquid discharge head including a tank;
FIG. 18 is a configuration diagram illustrating a printing portion using an intermediate transfer body having a drum shape; and
FIG. 19 is a configuration diagram illustrating a printing portion using an intermediate transfer body shaped as an endless belt.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments for implementing the present invention will be described in detail below with reference to the drawings. In the drawings, the same components are designated by the same reference numerals, and redundant explanations will be omitted as appropriate.

The embodiments described below describe examples of an electrode forming apparatus, a resin structure body manufacturing apparatus, an electrode forming method, and a resin structure body manufacturing method for realizing the technical idea of the present invention. However, the present invention is not limited to the embodiments described below. The dimensions, the material, the shape, the relative arrangement, and the like of the constitution components described below are not intended to limit the scope of the present invention, but are intended to be illustrative, unless specifically stated otherwise. Further, the sizes and positional relationships of members illustrated in the drawings may be enlarged for clarity of explanation. In each drawing, Cartesian coordinates having an X-axis, a Y-axis, and a Z-axis are used to express directions. The Z-direction is typically a vertical direction. The Z-positive direction is referred to as up, and the Z-negative direction is referred to as down. The X-direction and the Y-direction are typically horizontal directions.

In the present specification, an electrode manufacturing apparatus including a gas replacement module will be mainly described as an example.

The electrode manufacturing apparatus corresponds to an example of the electrode forming apparatus, and corresponds to an example of the resin structure body manufacturing apparatus. The electrode manufacturing apparatus includes at least an application unit to apply, onto a base material, a liquid composition that is curable by active energy rays. First, a liquid composition, a polymerizable compound, a resin structure body, a base material, and the like according to embodiments will be described in detail.

### <Liquid Composition>

A liquid composition according to the present embodiment contains a polymerizable compound, a solvent, and may contain other components such as a polymerization initiator, if desired. Further, the liquid composition is cured to form a resin structure body (also referred to as a "porous resin" in the following description) having a porous structure with a resin as the backbone.

Note that, in the present disclosure, the liquid composition forms a porous resin. However, this includes not only a case where a porous resin is formed in a liquid composition, but also a case where a precursor of a porous resin (for example, a backbone part of a porous resin) is formed in a liquid composition, and in a subsequent step (for example, a heating step and the like), a porous resin is formed. The expression "the liquid composition forms a porous resin" also includes a case where a part of components (such as a polymerizable compound) in the liquid composition is cured (polymerized) to form a backbone of a porous resin, but other components (such as a solvent) in the liquid composition are not cured and do not form a porous resin.

### (Polymerizable Compound)

The polymerizable compound forms a resin by polymerization, and forms a porous resin by polymerizing in a liquid composition. The resin formed from the polymerizable compound is preferably a resin including a network structure body formed by application of active energy rays (for example, irradiation with light, application of heat, and the like). Preferred examples of the resin include, but are not limited to, acrylate resins, methacrylate resins, urethane acrylate resins, vinyl ester resins, unsaturated polyester resins, epoxy resins, oxetane resins, vinyl ether resins, and resins formed by an ene-thiol reaction. A structure body can be easily formed by utilizing radical polymerization having high reactivity, and thus, acrylate resins, methacrylate resins, and urethane acrylate resins, which are resins formed from a polymerizable compound having a (meth)acryloyl group, as well as vinyl ester resins, which are resins formed from a polymerizable compound having a vinyl group, are more preferable from the viewpoint of productivity. These resins may be used alone or in combination of two or more types. If two or more resins are used in combination, the combination of the polymerizable compounds is not particularly limited and can be appropriately selected according to a purpose. Preferred examples thereof include combinations of urethane acrylate resins as main components with other resins, for the purpose of imparting flexibility. Note that, in the present disclosure, a polymerizable compound having an acryloyl group or a methacryloyl group is referred to as a polymerizable compound having a (meth)acryloyl group.

The polymerizable compound preferably has at least one functional group that is polymerizable by radical polymerization. Examples of the functional group that is polymerizable by radical polymerization include, but are not limited to, monofunctional, bifunctional, and trifunctional or higher functional radical-polymerizable compounds, functional monomers, and radical-polymerizable oligomers. Among these, bifunctional or higher functional radical-polymerizable compounds are preferred.

Examples of monofunctional radical-polymerizable compounds include, but are not limited to, 2-(2-ethoxyethoxy)ethyl acrylate, methoxypolyethylene glycol monoacrylate, methoxypolyethylene glycol monomethacrylate, phenoxy polyethylene glycol acrylate, 2-acryloyloxyethyl succinate, 2-ethylhexyl acrylate, 2-hydroxyethyl acrylate, 2-hydroxypropyl acrylate, tetrahydrofurfuryl acrylate, 2-ethylhexylcarbitol acrylate, 3-methoxybutyl acrylate, benzyl acrylate, cyclohexyl acrylate, isoamyl acrylate, isobutyl acrylate, methoxytriethylene glycol acrylate, phenoxy tetraethylene glycol acrylate, cetyl acrylate, isostearyl acrylate, stearyl acrylate, and styrene monomer. These compounds may be used alone or in combination of two or more types.

Examples of bifunctional radical-polymerizable compounds include, but are not limited to, 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, neopentyl glycol diacrylate, and tricyclodecane dimethanol diacrylate. These compounds may be used alone or in combination of two or more types.

Examples of trifunctional or higher functional radical-polymerizable compounds include, but are not limited to, trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloyloxyethyl) isocyanurate, dipentaerythritol hexaacrylate (DPHA), caprolactone-modified dipentaerythritol hexaacrylate, dipentaerythritol hydroxypentaacrylate, alkyl-modified dipentaerythritol pentaacrylate, alkyl-modified dipentaerythritol tetraacrylate, alkyl-modified dipentaerythritol triacrylate, dimethylolpropane tetraacrylate (DTMPTA), pentaerythritol ethoxytetraacrylate, EO-modified phosphate triacrylate, and 2,2,5,5-tetrahydroxymethyl cyclopentanone tetraacrylate. These compounds may be used alone or in combination of two or more types.

The content of the polymerizable compound in the liquid composition is preferably 5.0 mass% or more and 70.0 mass% or less, more preferably 10.0 mass% or more and 50.0 mass% or less, and even more preferably 20.0 mass% or more and 40.0 mass% or less, with respect to the total amount of the liquid composition. The content of the polymerizable compound is preferably 70.0 mass% or less, because in this case, the pore size of the obtained porous resin is several nanometers or less, which is not too small, and the porous resin has an appropriate porosity which prevents a decrease in permeation of liquids and gases. The content of the polymerizable compound is preferably 5.0 mass% or more, because in this case, a three-dimensional network structure of the resin is sufficiently formed to sufficiently obtain the porous structure, and the strength of the obtained porous structure is also improved.

### (Solvent)

The solvent (hereinafter also referred to as "porogen") is a liquid compatible with the polymerizable compound. The solvent is a liquid that becomes incompatible (causes phase separation) with the polymer (resin) generated during the process in which the polymerizable compound polymerizes in the liquid composition. By including the solvent in the liquid composition, when the polymerizable compound is polymerized in the liquid composition, in other words, when first active energy rays and second active energy rays are sequentially emitted in the liquid composition, the polymerizable compound forms a porous resin. Further, it is preferable that the solvent can dissolve a compound (a polymerization initiator described below) that generates radicals or acids by light or heat. The solvent may be used alone or in combination of two or more types. Note that the solvent is not polymerizable.

The boiling point when one type of porogen is used alone or when two or more types of porogen are used in combination is preferably 50°C or higher and 250°C or lower, and more preferably 70°C or higher and 200°C or lower, at normal pressure. When the boiling point is 50°C or higher, vaporization of the porogen near room temperature is suppressed, and thus, it easier to handle the liquid composition and to control the content of the porogen in the liquid composition. When the boiling point is 250°C or lower, the time used in a step of drying the porogen after polymerization is shortened, and the productivity for the porous resin is improved. Further, the amount of porogen remaining inside the porous resin can be reduced, so that the quality of the porous resin as a functional layer, such as a substance separation layer for separating substances and a reaction layer as a reaction field, is improved. The boiling point when one type of porogen is used alone or when two or more types of porogen are used in combination is preferably 120°C or higher at normal pressure.

Examples of the porogen include, but are not limited to, ethylene glycols such as diethylene glycol monomethyl ether, ethylene glycol monobutyl ether, ethylene glycol monoisopropyl ether, and dipropylene glycol monomethyl ether, esters such as γ-butyrolactone and propylene carbonate, and amides such as NN dimethylacetamide. Further examples of the porogen include, but are not limited to, liquids having relatively high molecular weight such as methyl tetradecanoate, methyl decanoate, methyl myristate, and tetradecane. Moreover, examples of the porogen also include, but are not limited to, liquids such as acetone, 2-ethylhexanol, and 1-bromonaphthalene.

Note that, not all of the liquids mentioned above correspond to porogen. As described above, the porogen is a liquid that is compatible with the polymerizable compound and becomes incompatible (causes phase separation) with the polymer (resin) generated during the process in which the polymerizable compound polymerizes in the liquid composition. In other words, whether a certain liquid corresponds to a porogen is determined by the relationship between the polymerizable compound and the polymer (the resin formed by polymerization of the polymerizable compound).

The liquid composition may be any liquid composition containing at least one type of porogen having the above-described specific relationship with the polymerizable compound. Therefore, the range for selecting materials for preparing the liquid composition is widened, and the liquid composition can be easily designed. As the range for selecting materials for preparing the liquid composition is widened, the range of applications widens in a case where the liquid composition preferably has additional characteristics other than the capability of forming a porous structure.

For example, when the liquid composition is to be discharged by an inkjet method, the liquid composition preferably has discharge stability as an additional characteristic other than the capability of forming a porous structure. Therefore, the range for selecting materials is widened, and the liquid composition can be easily designed.

As mentioned above, the liquid composition may be any liquid composition containing at least one type of porogen having the above-described specific relationship with the polymerizable compound. Thus, the liquid composition may additionally contain a liquid that does not have the above-described specific relationship with the polymerizable compound (a liquid that is not a porogen). However, the content of the liquid that does not have the above-described specific relationship with the polymerizable compound (the liquid that is not a porogen) is preferably 10.0 mass% or less, more preferably 5.0 mass% or less, and even more preferably 1.0 mass% or less, with respect to the total amount of the liquid composition, and particularly preferably, the liquid composition does not include a liquid that does not have the above-described specific relationship with the polymerizable compound.

The content of porogen in the liquid composition is preferably 30.0 mass% or more and 95.0 mass% or less, more preferably 50.0 mass% or more and 90.0 mass% or less, and even more preferably 60.0 mass% or more and 80.0 mass% or less, with respect to the total amount of the liquid composition. The content of porogen is preferably 30.0 mass% or more, because in this case, the pore size of the obtained porous body is several nanometers or less, which is not too small, and the porous body has an appropriate porosity, which prevents a decrease in permeation of liquids and gases. The content of the porogen is preferably 95.0 mass% or less, because in this case, a three-dimensional network structure of the resin is sufficiently formed to sufficiently obtain the porous structure, and the strength of the obtained porous structure is also improved.

The mass ratio of the content of the polymerizable compound with respect to the content of the porogen (polymerizable compound: porogen) in the liquid composition is preferably 1.0: 0.4 to 1.0: 19.0, more preferably 1.0: 1.0 to 1.0: 9.0, and even more preferably 1.0: 1.5 to 1.0: 4.0.

### ((Polymerization-induced Phase Separation))

The porous resin is formed by polymerization-induced phase separation. The polymerization-induced phase separation refers to a state in which the porogen is compatible with the polymerizable compound, but is incompatible (causes phase separation) with the polymer (the resin) generated during the process in which the polymerizable compound polymerizes. Among existing methods of obtaining a porous resin by phase separation, the polymerization-induced phase separation method advantageously forms a porous body having a network structure, so that a porous body having high resistance to chemicals and heat is obtained. Additionally, compared to other methods, the polymerization-induced phase separation method also has the advantage of short process time and easy surface modification.

Next, a process of forming a porous resin by polymerization-induced phase separation is described. When being irradiated with light or the like, the polymerizable compound undergoes a polymerization reaction to form a resin. During this process, the solubility of the polymerizable compound with respect to the porogen in the growing resin decreases and phase separation occurs between the resin and the porogen. Finally, the resin forms a porous structure in which the pores are filled with the porogen or the like.

The porous structure is dried to remove porogen and the like, and a porous resin remains. Therefore, to form a porous resin having an appropriate porosity, the compatibility between the porogen and the polymerizable compound and the compatibility between the porogen and the resin formed by polymerization of the polymerizable compound are examined.

The compatibility between the porogen and the polymerizable compound is determined as follows.

First, the liquid composition is injected into a quartz cell, and the transmittance of light (visible light) at a wavelength of 550 nm of the liquid composition is measured while stirring the liquid composition by using a stirrer at 300 rpm. In the present disclosure, when the light transmittance is 30% or more, it is determined that the polymerizable compound and the porogen are compatible, and when the light transmittance is less than 30%, it is determined that the polymerizable compound and the porogen are incompatible. The conditions relating to the measurement of the light transmittance are described below.
- Quartz cell: Special microcell having screw cap (product name: M25-UV-2)
- Transmittance measurement device: USB 4000, manufactured by Ocean Optics, Inc.
- Stirring speed: 300 rpm
- Measurement wavelength: 550 nm
- Reference: Light transmittance at wavelength of 550 nm measured and acquired in quartz cell filled with air (transmittance: 100%)

The compatibility between the porogen and the resin formed by the polymerization of the polymerizable compound is determined as follows.

First, fine resin particles are uniformly dispersed on an alkali-free glass substrate by spin coating to obtain a gap agent. Subsequently, the substrate coated with the gap agent is bonded to an alkali-free glass substrate not coated with the gap agent, so that a surface coated with the gap agent is sandwiched therebetween. Next, the liquid composition is filled into a space between the bonded substrates by utilizing capillary action, to prepare a "pre-UV irradiation haze measurement element". Subsequently, the pre-UV irradiation haze measurement element is irradiated with UV light to cure the liquid composition. Finally, the periphery of the substrate is sealed with a sealant to produce a "haze measurement element". The conditions during the preparation are described below.
- Alkali-free glass substrate: OA-10G manufactured by Nippon Electric Glass Co., Ltd., 40 mm, t = 0.7 mm
- Gap agent: fine resin particles MICROPEARL GS-L100, average particle size 100 µm, manufactured by Sekisui Chemical Co., Ltd.
- Spin coating conditions: dispersion liquid dropping amount 150 µL, rotation speed 1000 rpm, rotation time 30 s
- Amount of liquid composition being filled: 160 µL
- UV irradiation conditions: UV-LED used as light source, wavelength of light source 365 nm, irradiation intensity 30 mW/cm², irradiation time 20 s
- Sealant: TB3035B (manufactured by Three Bond Co., Ltd.)

Next, a haze value (cloudiness) is measured by using the prepared pre-UV irradiation haze measurement element and the haze measurement element. A measurement value of the pre-UV irradiation haze measurement element is used as a reference (a haze value of 0) to calculate an increase rate of the measurement value (haze value) of the haze measurement element with respect to the measurement value of the pre-UV irradiation haze measurement element. The haze value of the haze measurement element increases as the compatibility of the resin formed by polymerization of the polymerizable compound with the porogen decreases, and the haze value decreases as the compatibility increases. A higher haze value indicates that the resin formed by the polymerization of the polymerizable compound is more likely to form a porous structure. In the present disclosure, when the increase rate of the haze value is 1.0% or more, it is determined that the resin and the porogen are incompatible, and when the increase rate of the haze value is less than 1.0%, it is determined that the resin and the porogen are compatible. A device used in the measurement is described below.
- Haze measurement device: Haze meter NDH 5000 manufactured by Nippon Denshoku Industries, Co., Ltd.

### (Polymerization Initiator)

A polymerization initiator is a material that can generate an active species such as radicals and cations by using energy such as light and heat, and can initiate polymerization of a polymerizable compound. As the polymerization initiator, known radical polymerization initiators, cationic polymerization initiators, base generators, and the like can be used alone or in combination of two or more types, and among these, photoradical polymerization initiators are preferably used.

A photoradical generator can be used as the photoradical polymerization initiator. For example, photoradical polymerization initiators such as Michler's ketone and benzophenone, known under the product names IRGACURE and DAROCUR can be suitably used as the photoradical polymerization initiator, and specific examples of compounds include, but are not limited to, benzophenone, acetophenone derivatives such as α-hydroxy- or α-aminoacetophenone, 4-aroyl-1,3-dioxolane, benzyl ketal, 2,2-diethoxyacetophenone, and p-dimethylaminoacetophene, p-dimethylaminopropiophenone, benzophenone, 2-chlorobenzophenone, pp'-dichlorobenzophene, pp'-bisdiethylaminobenzophenone, Michler's ketone, benzyl, benzoin, benzyl dimethyl ketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenyl ketone, 2-hydroxy-2-methyl-1-phenyl-1-one, 1-(4-isopropylphenyl)-2-hydroxy-2-methylpropan-1-one, methylbenzoylformate, benzoin isopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1 -(4-morpholinophenyl)-butanone-1,1 -hydroxy-cyclohexyl-phenyl-ketone, 2,2-dimethoxy-1,2-diphenylethan-1-one, bis(η5-2,4-cyclopentadien-1-yl)-bis(2,6-difluoro-3-(1H-pyrrol-1-yl)-phenyl)titanium, bis(2,4,6-trimethylbenzoyl)-phenylphosphine oxide, 2-methyl-1[4-(methylthio)phenyl]-2-morpholinopropan-1-one, 2-hydroxy-2-methyl-1-phenyl-propan-1-one (DAROCUR 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propane-1-one monoacylphosphine oxide, bisacylphosphine oxide, or titanocene, fluorescene, anthraquinone, thioxanthone, or xanthone, lophine dimer, a trihalomethyl compound, or a dihalomethyl compound, an active ester compound, and an organoboron compound.

Further, a photocrosslinking radical generator such as a bisazide compound may be included at the same time. In the case of polymerization by heat, it is possible to use a thermal polymerization initiator such as azobisisobutyronitrile (AIBN), which is a typical radical generator.

To obtain a sufficient curing rate, the content of the polymerization initiator is preferably 0.05 mass% or more and 10.0 mass% or less, and more preferably 0.5 mass% or more and 5.0 mass% or less, when the total mass of the polymerizable compounds is 100.0 mass%.

### (Other Items)

The liquid composition of the present disclosure may be a non-dispersed composition in which the liquid composition does not contain dispersed material or a dispersion-based composition in which the liquid composition contains dispersed material. However, the liquid composition is preferably a non-dispersed composition. This is because, when the liquid composition is a non-dispersed composition, the liquid composition can be used for various application unit. For example, the liquid composition is preferably a non-dispersed composition, because in this case, the liquid composition can be stably used in an inkjet system in which it is desirable to maintain discharge stability.

### <Method of Manufacturing Liquid Composition>

Preferably, the liquid composition is prepared in a step of dissolving a polymerization initiator in a polymerizable compound, a step of further dissolving a porogen and other components, and a step of stirring the obtained mixture to obtain a uniform solution.

### <Physical Properties of Liquid Composition>

From the viewpoint of workability when applying the liquid composition, the liquid composition preferably has a viscosity at 25°C of 1.0 mPa*s or more and 150.0 mPa*s or less, more preferably 1.0 mPa*s or more and 30.0 mPa*s or less, and particularly preferably 1.0 mPa*s or more and 25.0 mPa*s or less. When the viscosity of the liquid composition is 1.0 mPa*s or more and 30.0 mPa*s or less, the liquid composition exhibits good dischargeability even when used in an inkjet method. Here, the viscosity may be measured using, for example, a viscometer (device name: RE-550L, manufactured by Toki Sangyo Co., Ltd.).

### <Base Material>

Next, the base material according to the embodiment will be described.

Any material can be used as the base material, such as a transparent material or an opaque material. That is, various base materials can be used, such as transparent base materials including glass base materials, resin film base materials such as various types of plastic films, and composite substrates thereof, and opaque base materials including silicon base materials, metal base materials such as stainless steel, or laminates thereof. The base material may also be a recording medium such as plain paper, glossy paper, special paper, and cloth. Further, the recording medium may be a base material having low permeability (a base material having low absorption). A base material having low permeability refers to a base material having a surface with low water permeability, low absorption, or low adsorption, and also includes a material that has many cavities on the inside but does not open to the outside. Examples of the base material having low permeability include, but are not limited to, recording media such as coated paper used in commercial printing, and cardboard obtained by mixing recycled paper pulp into a middle layer and a back layer and coating a surface. Note that the base material may be a porous resin sheet used as an insulating layer for a power storage element or a power generation element.

Examples of the base material used for manufacturing an electrode include, but are not limited to, electrode base materials for positive and negative electrodes, and specific examples thereof include, but are not limited to, aluminum foil and copper foil. Further, if the film to be formed in the electrode manufacturing apparatus according to the embodiment is a separator layer, the base material is preferably an electrode base material in which an active material layer is formed on aluminum foil or copper foil. An example of the active material layer is a porous body mainly including carbon and the like, through which an electrolytic solution can pass.

The base material may have any shape such as a shape having a curved surface or a recessed-projected shape, as long as the base material is applicable to a printing step portion, and a polymerization step portion.

### <Resin Structure Body>

Next, a resin structure body according to the embodiment will be described.

A film thickness of the resin structure body (porous resin) including a porous structure with the resin formed by the liquid composition as a backbone is not particularly limited. However, from the viewpoint of uniform curing during polymerization, the film thickness is preferably 0.01 µm or more and 500 µm or less, more preferably 0.01 µm or more and 100 µm or less, even more preferably 1 µm or more and 50 µm or less, and particularly preferably 10 µm or more and 20 µm or less. When the film thickness is 0.01 µm or more, the surface area of the obtained porous resin increases, and the function of the porous resin can be sufficiently obtained. Further, when the film thickness is 500 µm or less, unevenness of light and heat used during polymerization is suppressed in a film thickness direction, and a porous resin that is uniform in the film thickness direction can be obtained. By preparing a porous resin that is uniform in the film thickness direction, structural unevenness of the porous resin can be suppressed, and a decrease in permeability for liquids and gases can be suppressed. The film thickness of the porous resin is appropriately adjusted in accordance with an application in which the porous resin is used. For example, when a porous resin is used as an insulating layer for a power storage element, the film thickness of the porous resin is preferably 10 µm or more and 20 µm or less.

The porous resin to be formed is not particularly limited. However, to secure good permeability for liquids and gases, the porous resin preferably has a three-dimensional branched network structure of the cured resin as the backbone and a co-continuous structure (also referred to as a monolith structure) in which a plurality of pores are continuously connected with each other in the porous resin. That is, the porous resin preferably has multiple pores and spreads three-dimensionally in a communicating structure in which each one of the pores is connected to another pore in the vicinity. As the pores communicate with each other, liquids and gases can sufficiently permeate, and the porous resin effectively fulfills the functions of substance separation and as a reaction field.

When the porous resin has a co-continuous structure, air permeability is one of the obtained physical properties. For example, the air permeability of the porous resin is measured according to JIS P8117, and is preferably 500 sec/100 mL or less, and more preferably 300 sec/100 mL or less.

At this time, the air permeability is measured by using, for example, a Gurley densometer (manufactured by Toyo Seiki Seisaku-sho, Ltd.).

The cross-sectional shape of the pores of the porous resin being formed is not particularly limited and may include various shapes, such as a substantially circular shape, a substantially elliptical shape, and a substantially polygonal shape, and may include various sizes. Here, the size of the pores refers to a length of the longest portion in the cross-sectional shape. The size of the pores can be determined from a cross-sectional image captured with a scanning electron microscope (SEM). The size of the pores of the porous resin is not particularly limited. However, from the viewpoint of liquid or gas permeability, the size of the pores is preferably 0.01 µm or more and 10 µm or less. Further, the porosity of the porous resin is preferably 30% or more, and more preferably 50% or more. A method of adjusting the size of the pores and the porosity of the porous resin to the above-described ranges is not particularly limited. However, examples of the method include, but are not limited to, a method of adjusting the content of the polymerizable compound in the liquid composition to the above-described range, a method of adjusting the content of the porogen in the liquid composition to the above-described range, and a method of adjusting the irradiation conditions of active energy rays.

### (Applications of Resin Structure Body)

### ((Application as Power Storage Element or Application as Power Generation Element))

A resin structure body (porous resin) having a porous structure with the resin formed by using the above-described liquid composition as a backbone can be used, for example, as an insulating layer for a power storage element or a power generation element. When the resin structure body is used in these applications, the insulating layer (separator) is preferably formed by applying the liquid composition onto an active material layer formed on an electrode substrate in advance.

A known insulating layer for a power storage element or a power generation element includes, for example, a film-like porous insulating layer that is porous and has pores of a predetermined size. On the other hand, if the above-described liquid composition is used, it is possible to improve the degree of freedom in designing power storage elements and power generation elements in terms of performance, by appropriately changing the content of the polymerizable compound, the content of the porogen, the irradiation conditions of active energy rays, and the like, to appropriately adjust the pores and the porosity. Further, the above-described liquid composition can be used in various application methods, such as an inkjet method, and can improve the degree of freedom in designing the shapes of power storage elements and power generation elements.

Note that the insulating layer is a member that separates the positive electrode and the negative electrode and ensures ionic conductivity between the positive electrode and the negative electrode. In the present disclosure, the insulating layer is not limited to an insulating layer having a layered shape.

When the above-described liquid composition is applied onto an insulating layer (a first insulating layer) for a power storage element or a power generation element, the liquid composition can additionally form an insulating layer (a second insulating layer) formed of the porous resin layer. By forming the second insulating layer on the first insulating layer, various functions such as heat resistance, impact resistance, and high temperature shrinkage resistance of the insulating layer as a whole can be added or improved.

The electrode substrate is not particularly limited, as long as the electrode substrate is a conductive substrate, and it is possible to use aluminum foil, copper foil, stainless steel foil, titanium foil, and etched foil obtained by etching these foils to form small holes, which can generally be suitably used in secondary batteries and capacitors forming power storage devices, and especially in lithium ion secondary batteries, and perforated electrode substrates used in lithium ion capacitors. Further, it is also possible to use an electrode substrate obtained by flattening nonwoven or woven carbon paper fibrous electrodes used in power generation devices such as fuel cells, and among the above-described perforated electrode substrates, an electrode substrate having small holes. Further, in the case of a solar device, in addition to the above-described electrodes, it is possible to use an electrode obtained by forming a transparent semiconductor thin film such as indium-titanium oxide or zinc oxide on a flat substrate such as glass or plastic, or an electrode obtained by thinly depositing a conductive electrode film by vapor deposition.

The active material layer is formed by dispersing a powdery active material or a catalyst composition in a liquid, applying the liquid onto an electrode substrate, and fixing and drying the liquid. Generally, the active material layer is formed by printing using a spray, a dispenser, or a die coater, or dip coating, followed by drying.

A positive electrode active material is not particularly limited, as long as the positive electrode active material is a material that can reversibly occlude and release alkali metal ions. Typically, a transition metal compound containing an alkali metal can be used as the positive electrode active material. Examples of lithium-containing transition metal compounds include, but are not limited to, composite oxides including lithium and at least one element selected from the group including cobalt, manganese, nickel, chromium, iron, and vanadium. Examples of the lithium-containing transition metal compounds include, but are not limited to, lithium-containing transition metal oxides such as lithium cobaltate, lithium nickelate, and lithium manganate, olivine-type lithium salts such as LiFePO₄, chalcogen compounds such as titanium disulfide and molybdenum disulfide, and manganese dioxide. The lithium-containing transition metal oxides are metal oxides containing lithium and a transition metal or a metal oxide in which a part of the transition metal in the metal oxide is replaced with a different element. Examples of the different element include, but are not limited to, Na, Mg, Sc, Y, Mn, Fe, Co, Ni, Cu, Zn, Al, Cr, Pb, Sb, and B, and among these, Mn, Al, Co, Ni, and Mg are preferred. The different element may be one type or two or more types of elements may be used. These positive electrode active materials can be used alone or in combination of two or more types. In a nickel-metal hydride battery, examples of the above-described active material include, but are not limited to, nickel hydroxide.

A negative electrode active material is not particularly limited, as long as the negative electrode active material is a material that can reversibly occlude and release alkali metal ions. Typically, a carbon material containing graphite having a graphite-type crystal structure can be used as the negative electrode active material. Examples of such carbon materials include, but are not limited to, natural graphite, spherical or fibrous artificial graphite, non-graphitizable carbon (hard carbon), and easily graphitizable carbon (soft carbon). Examples of negative electrode active materials other than carbon materials include, but are not limited to, lithium titanate. Further, from the viewpoint of increasing the energy density of lithium ion batteries, high-capacity materials such as silicon, tin, silicon alloys, tin alloys, silicon oxides, silicon nitrides, and tin oxides can also be suitably used as the negative electrode active material.

### [Embodiment]

### <Overall Configuration of Electrode Manufacturing Apparatus 100>

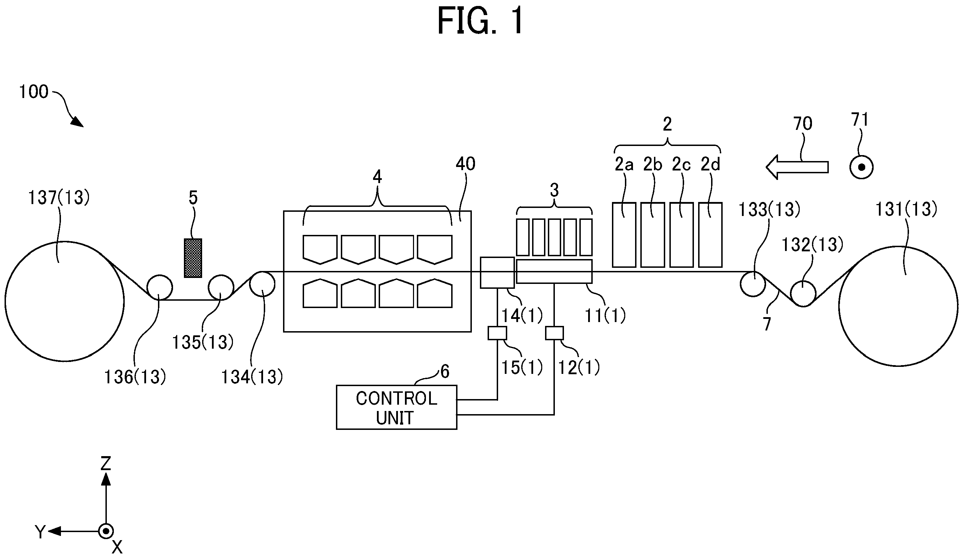

FIG. 1 is a diagram for describing an example of an overall configuration of an electrode manufacturing apparatus 100 according to an embodiment, and is a schematic see-through side view of the electrode manufacturing apparatus 100.

As illustrated in FIG. 1, the electrode manufacturing apparatus 100 includes a gas replacement module 1, a conveyance unit 13, an application unit 2, an irradiation unit 3, a heating unit 4, an inspection unit 5, and a control unit 6. The gas replacement module 1 includes a first chamber 11, a first gas supply unit 12, a second chamber 14, and a second gas supply unit 15. The conveyance unit 13 includes an unwinding roll 131, support rolls 132 to 136, and a wind-up roll 137.

The electrode manufacturing apparatus 100 conveys a base material 7 in a conveyance direction 70 by the conveyance unit 13. The unwinding roll 131, the support roll 132, the support roll 133, the application unit 2, the irradiation unit 3, the first chamber 11, the second chamber 14, the heating unit 4, the support roll 134, the support roll 135, the inspection unit 5, the support roll 136, and the wind-up roll 137 are arranged in this order from upstream to downstream in the conveyance direction 70. The arrangement positions of the irradiation unit 3 and the first chamber 11 in the conveyance direction 70 may be substantially the same.

In the present embodiment, the electrode manufacturing apparatus 100 uses the application unit 2 to apply a liquid composition containing a polymerizable compound onto the base material 7, and uses the irradiation unit 3 to irradiate the liquid composition on the base material 7 applied by the application unit 2, with ultraviolet rays as active energy rays. After the liquid composition is applied onto the base material 7 by the application unit 2, the irradiation unit 3 irradiates the liquid composition on the base material 7 conveyed inside the first chamber 11 with ultraviolet rays.

The electrode manufacturing apparatus 100 forms a functional layer provided between positive and negative electrodes, in a process of manufacturing a battery, for example. Further, the electrode manufacturing apparatus 100 uses a so-called roll-to-roll method in which a liquid composition curable by ultraviolet rays is continuously applied onto the base material 7 that is being unwound from a state of being wound into a roll, a resin structure body is formed by using the liquid composition on the base material, and afterwards, the obtained product is wound again into a roll. In the present specification, a liquid composition curable by ultraviolet rays is described as an example of a liquid composition curable by active energy rays, but the liquid composition is not limited thereto. The liquid composition may be curable by heat rays or by an electron beam.

More specifically, the electrode manufacturing apparatus 100 uses the application unit 2 to apply a liquid composition to a predetermined thickness onto the base material 7 that is unwound from the unwinding roll 131 and conveyed along the conveyance direction 70. The electrode manufacturing apparatus 100 irradiates the liquid composition applied onto the base material 7 with ultraviolet rays from multiple irradiation units 3, to cure the liquid composition. Afterwards, the electrode manufacturing apparatus 100 uses the heating unit 4 to heat and dry the liquid composition on the base material 7, and fixes the liquid composition on the base material 7 to form a resin structure body. The electrode manufacturing apparatus 100 uses the inspection unit 5 to inspect the resin structure body fixed on the base material 7 and then, the resin structure body is wound up by the wind-up roll 137. The base material 7 on which the resin structure body is formed and that is wound up by the wind-up roll 137 is transferred to the next step or shipped as a finished product in the wound state. The support rolls 132 to 136 are used to support the base material 7 that is conveyed between the constitution components. The position and the number of the support rolls can be appropriately changed.

In the gas replacement module 1 in the electrode manufacturing apparatus 100, the first chamber 11 includes a first opening and a second opening, and gas present inside the first chamber 11 can be replaced with a first gas. The first chamber 11 is a housing container such as a chamber formed of a material such as glass and plastic.

The first gas supply unit 12 supplies the first gas into the first chamber 11. The first gas supply unit 12 includes a gas cylinder that supplies the first gas, a regulator that adjusts the supply amount, the supply speed, and the like of the first gas from the gas cylinder, etc. The first gas supply unit 12 may include a mass flow meter or the like that can measure the mass or the flow rate of the first gas.

The second chamber 14 is arranged on the downstream side of the first chamber 11 in the conveyance direction 70 in which the base material is conveyed by the conveyance unit 13, which will be described later. The second chamber 14 is a housing container such as a chamber formed of a material such as glass and plastic. Particularly in the present embodiment, the internal pressure of the second chamber 14 is equal to or higher than atmospheric pressure and equal to or lower than the internal pressure of the first chamber 11.

The second gas supply unit 15 supplies a second gas into the second chamber 14 arranged on the downstream side of the first chamber 11 in the conveyance direction 70. The second gas supply unit 15 includes a gas cylinder that supplies the second gas, a regulator that adjusts the supply amount, the supply speed, and the like of the second gas from the gas cylinder, etc. The second gas supply unit 15 may include a mass flow meter or the like that measures the mass or the flow rate of the second gas. Further, the second gas supply unit 15 may include a compressed air device, a direct current (DC) fan, or the like.

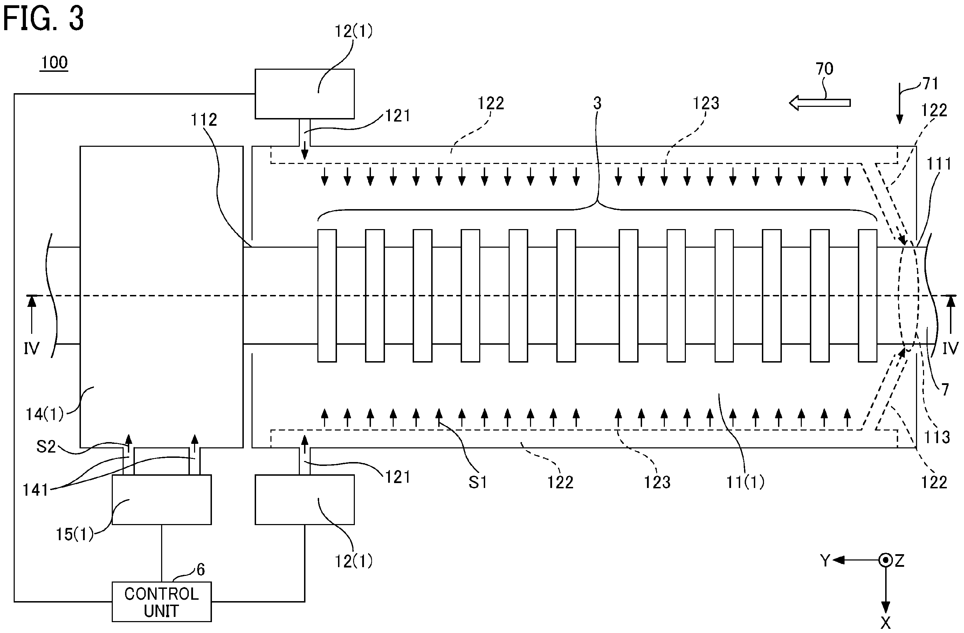

Note that the configuration of the gas replacement module 1 will be separately described in detail with reference to FIGs. 3 to 4.

The conveyance unit 13 conveys the base material 7 so that the base material 7 is at least inserted into the first chamber 11 via the first opening and removed from the first chamber 11 to the outside via the second opening.

The application unit 2 includes discharge portions 2a, 2b, 2c, and 2d for discharging the liquid composition. Each of the discharge portions 2a, 2b, 2c, and 2d includes a plurality of nozzles arranged along a width direction 71 substantially orthogonal to the conveyance direction 70 and to an up-down direction, and the liquid composition is discharged from the plurality of nozzles by an inkjet method. The application unit 2 applies, onto the base material 7, the liquid composition being discharged from the nozzles of the discharge portions 2a, 2b, 2c, and 2d.

For example, the application unit 2 applies the liquid composition to form a resin structure body including, on a base material including at least one of a positive electrode base material and a negative electrode base material, a porous resin layer. When the resin structure body includes the porous resin layer, it is possible to reduce a blocking phenomenon, even when vacuum drying is adopted to dry the resin structure body in a rolled state. Note that the blocking phenomenon refers to a phenomenon in which parts of the resin structure body stick to each other.

The above-described resin structure body is, for example, a separator layer provided between a positive electrode and a negative electrode. When forming the separator layer, the thickness of the liquid composition applied to the base material 7 by the application unit 2 may be within a range from 10 µm or more to 50 µm or less. Film-forming materials mainly include a resin, and thus, the liquid composition is a liquid or a gel-like composition mainly containing a resin precursor (monomer) and containing a solvent and the like.

In addition to an inkjet method, an application method that can be employed by the application unit 2 includes a die coater method, a wire bar method, a doctor blade method, or a printing method. The printing method includes, but is not limited to, an offset printing method, a Carlson process method, and an inkjet method.

The multiple irradiation units 3 are arranged side by side in the conveyance direction 70 to face the base material 7 being conveyed. Each of the multiple irradiation units 3 irradiates the base material 7 with ultraviolet rays. Note that the number of irradiation units 3 provided may be at least one.

The heating unit 4 is arranged on the downstream side of the second chamber 14 in the conveyance direction 70 and heats the liquid composition applied onto the base material 7 by the application unit 2. In the example illustrated in FIG. 1, multiple heating units 4 heat the liquid composition applied onto the base material 7 to evaporate liquid components remaining inside the liquid composition. When the liquid composition is applied by an inkjet method, a liquid such as a solvent may be added to the liquid composition in addition to the resin curable by ultraviolet rays, to adjust the viscosity to an appropriate level. The heating unit 4 can volatilize such a liquid.

Examples of the heating method used by the heating unit 4 include, but are not limited to, a method of passing the base material 7 through a drying oven at high temperature, a method of blowing hot air, a method of irradiating the base material 7 with infrared rays, a method of winding the base material 7 onto a high-temperature rotating drum, and a high-frequency dielectric method.

The multiple heating units 4 are accommodated inside a housing 40. In the present embodiment, the internal pressure of the housing 40 is a negative pressure to prevent the release of hot air from the inside of the housing 40 to the outside.

In the present embodiment, the housing 40 may be arranged on the downstream side of the irradiation unit 3 in the conveyance direction 70, so that inert gas that is generated by the irradiation by the irradiation unit 3, allowed to pass through the second chamber 14, and released to the outside of the second chamber 14, is sucked into the housing 40. The housing 40 is preferably arranged near the irradiation unit 3 so that the gas from the second chamber 14 can be efficiently sucked in. The housing 40 corresponds to a sucking unit to suck in at least a part of the gas released from the second chamber 14. When the housing 40 sucks in the inert gas generated by the emission of ultraviolet rays by the irradiation unit 3, the electrode manufacturing apparatus 100 can prevent the inert gas from spreading in the vicinity of the electrode manufacturing apparatus 100.

Further, in the present embodiment, the housing 40 may include the heating unit 4. When the housing 40 includes the heating unit 4, the configuration of the electrode manufacturing apparatus 100 can be simplified.

Further, in the present embodiment, the application unit 2 may also be arranged inside a predetermined housing portion, and the inside of the housing portion may be maintained at negative pressure from the viewpoint of reducing scattering of mist. In this case, it is preferable that, in the housing portion of the application unit 2, the absolute value of the negative pressure on the downstream side near the irradiation unit 3 is greater than the absolute value of the negative pressure on the upstream side in the conveyance direction 70. Thus, it is possible to reduce an adverse effect on the application of the liquid composition onto the base material 7 by the application unit 2, which is caused when the inert gas released by the irradiation by the irradiation unit 3 flows into the housing portion of the application unit 2.

The inspection unit 5 inspects the quality of the resin structure body formed on the base material 7 by the liquid composition.

The inspection unit 5 includes a high-speed camera, inspects the resin structure body for defects such as thickness unevenness and pinholes, and stores an inspection result including positional information of defective locations on the base material 7.

The control unit 6 controls an operation of the electrode manufacturing apparatus 100. For example, the control unit 6 is constructed by a computer. In the present embodiment, the control unit 6 controls the internal pressure of each of the first chamber 11 and the second chamber 14. Note that the control unit 6 can be arranged at any position.

### <Configuration Example of Application Unit 2>

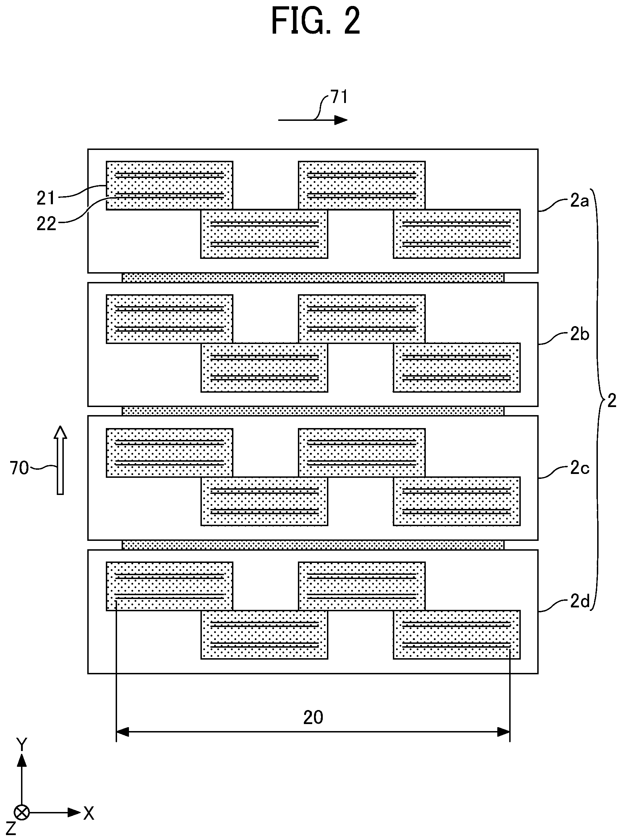

FIG. 2 is a diagram illustrating an example of the configuration of the application unit 2. FIG. 2 illustrates the application unit 2, viewed from a direction in which the liquid composition is discharged. In the electrode manufacturing apparatus 100 illustrated in FIG. 1, the base material 7 is conveyed along the conveyance direction 70 in a state of facing the discharge portions 2a, 2b, 2c, and 2d included in the application unit 2.

As illustrated in FIG. 2, the discharge portions 2a, 2b, 2c, and 2d may form a line-type discharge portion. Here, the line-type discharge portion refers to a discharge portion in which, in the width direction 71, a plurality of nozzles are provided over the whole of an application width 20 for applying the liquid composition onto the base material 7. The electrode manufacturing apparatus 100 can apply the liquid composition to a wide area in the base material 7 in one process by using the line-type discharge portion, so that an electrode can be manufactured faster.

Each of the discharge portions 2a, 2b, 2c, and 2d includes four heads 21 arranged along the width direction 71. The four heads 21 include a plurality of nozzles 22 arranged along the width direction 71.

The discharge portions 2a, 2b, 2c, and 2d discharge the liquid composition from the plurality of nozzles 22 arranged over the whole of the application width 20 for applying the liquid composition onto the base material 7 in the width direction 71, and thus, the liquid composition is applied onto the base material 7. Accordingly, the application unit 2 can apply the liquid composition onto the base material 7 over the whole of the application width 20 without moving. Note that the number of heads included in one discharge portion can be appropriately changed in accordance with the length of the application width 20 in the width direction 71.

By using the four heads 21, a unit for stimulating the liquid composition to discharge the liquid composition can be appropriately selected in accordance with a purpose, and examples of the unit include, but are not limited to, a pressure device, a piezoelectric element, a vibration generation device, an ultrasonic oscillator, and a light source. Specific examples of the unit include, but are not limited to, piezoelectric actuators such as piezoelectric elements, shape-memory alloy actuators in which a metal phase changes with a temperature change, and electrostatic actuators that use electrostatic force.

Among these, it is particularly preferable to use a unit that applies a voltage to a piezoelectric element adhered to a position referred to as a pressure chamber (also referred to as "a liquid chamber" and the like) in an ink flow path in each of the four heads 21. In the four heads 21, the piezoelectric elements are bent by the voltage being applied, and the volume of the pressure chamber decreases. Thus, pressure is applied to the ink in the pressure chamber, so that the ink is discharged as droplets from the nozzles.

Further, the discharge portions 2a, 2b, 2c, and 2d may each include a discharge unit.

The discharge unit is a collective body of functional components and mechanisms related to the discharge of the liquid composition from the discharge portions 2a, 2b, 2c, and 2d. The discharge unit includes a combination of at least one of a supply mechanism, a maintenance and recovery mechanism, and a liquid discharge head moving mechanism with each of the discharge portions 2a, 2b, 2c, and 2d.

### [Embodiment for Forming Porous Resin Layer by Direct Application of Liquid Composition to Base Material]

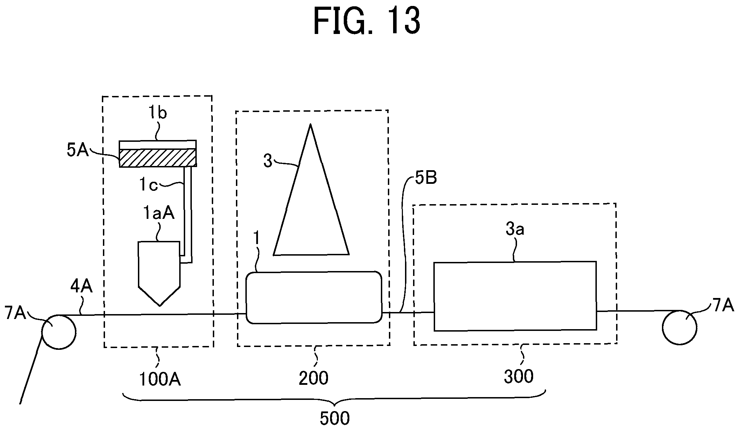

FIG. 13 is a schematic diagram illustrating an example of an electrode manufacturing apparatus (electrode forming apparatus) for implementing the electrode forming method of the present embodiment.

An electrode manufacturing apparatus 500 is an apparatus for manufacturing a porous resin layer by using the liquid composition described above. The electrode manufacturing apparatus includes, on a printing base material 4A, a printing portion 100A that performs an application process of applying a liquid composition to form a liquid composition layer, a polymerization portion 200 that performs a polymerization process of polymerizing the liquid composition layer by application of heat or light, and a removal portion 300 that performs a removal process of heating a porous resin precursor 5B obtained by polymerizing the liquid composition, to remove solvent in the pores of the porous resin precursor 5B and obtain a porous resin. The electrode manufacturing apparatus includes a conveyance portion 7A that conveys the printing base material 4A. The conveyance portion 7A conveys the printing base material 4A at a speed set in advance to the printing portion 100A, the polymerization portion 200, and the removal portion 300 in this order.

### - Printing Portion 100A -

The printing portion 100A includes a printing device 1aA, which is an example of the application unit for implementing an application step of applying a liquid composition for forming a porous resin layer on the printing base material 4A, a storage container 1b storing the liquid composition, and a supply tube 1c for supplying the liquid composition stored in the storage container 1b to the printing device 1aA.

The storage container 1b stores the liquid composition 5A, and the printing portion 100A discharges the liquid composition 5A from the printing device 1aA to apply the liquid composition 5A onto the printing base material 4A conveyed by the conveyance portion 7A, to form a liquid composition layer as a thin film. The storage container 1b may be integrally formed with the electrode manufacturing apparatus, or may be removable from the electrode manufacturing apparatus.

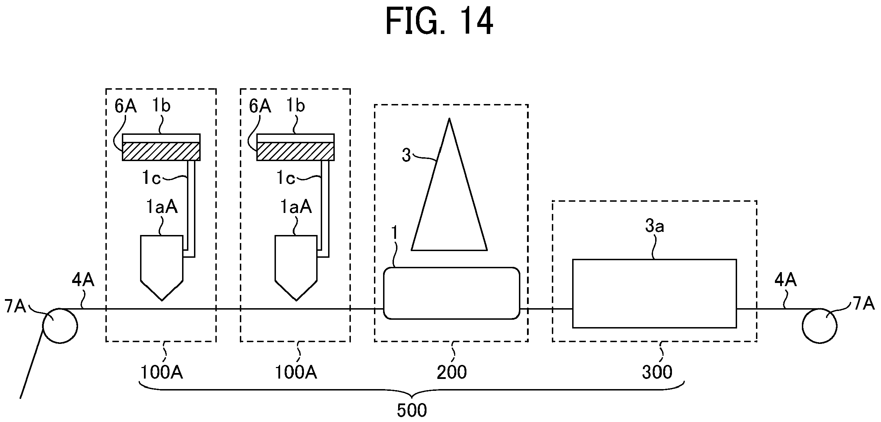

Further, the storage container 1b may be a container used for addition to a storage container integrally formed with the electrode manufacturing apparatus or a container removable from the electrode manufacturing apparatus. As illustrated in FIG. 14, multiple printing portions 100A may be provided.

The storage container 1b and the supply tube 1c can be freely selected, as long as the storage container 1b and the supply tube 1c can stably store and supply the liquid composition 5A. It is preferable that the material forming the storage container 1b and the supply tube 1c has light-shielding properties in a relatively short wavelength region of ultraviolet and visible light. This prevents external light from initiating polymerization of the liquid composition 5A.

### - Polymerization Portion 200 -

As illustrated in FIG. 13, in the case of photopolymerization, the polymerization portion 200 includes the irradiation unit 3, which is an example of a polymerization unit for implementing the polymerization step, and the gas replacement module 1 for circulating a polymerization-inactive gas. The irradiation unit 3 irradiates the liquid composition layer formed by the printing portion 100A with light in the presence of the polymerization-inactive gas, and causes the liquid composition layer to photopolymerize, to obtain a porous resin precursor 5B.

The irradiation unit 3 is not particularly limited and may be appropriately selected in accordance with the absorption wavelength of the photopolymerization initiator contained in the liquid composition layer, as long as the irradiation unit 3 can initiate and promote polymerization of the compounds in the liquid composition layer. Specific examples of the irradiation unit 3 include, but are not limited to, ultraviolet light sources such as a high-pressure mercury lamp, a metal halide lamp, a hot cathode tube, a cold cathode tube, and a light-emitting diode (LED). However, light having a shorter wavelength generally tends to reach deeper parts, and thus, it is preferable to select a light source in accordance with the thickness of a porous film to be formed.

If the irradiation intensity of the light source of the irradiation unit 3 is too strong, the polymerization proceeds rapidly before phase separation sufficiently occurs, and thus, it is more difficult to obtain a porous structure. Further, if the irradiation intensity is too weak, phase separation progresses on a microscale or on a larger scale, and thus, the porosity tends to vary and the porous structure tends to become coarse. Moreover, the irradiation time also increases, so that the productivity is likely to decrease. Therefore, the irradiation intensity is preferably 10 mW/cm² or more and 1 W/cm² or less, and more preferably 30 mW/cm² or more and 300 mW/cm² or less.

The gas replacement module 1 lowers the concentration of oxygen, which is polymerization-active and present in the atmosphere, so that a polymerization reaction of the polymerizable compound proceeds without being hindered near the surface of the liquid composition layer.

Therefore, the polymerization-inactive gas being used is not particularly limited, as long as the polymerization-inactive gas satisfies the above-described functions. Examples of the polymerization-inactive gas include, but are not limited to, nitrogen gas, carbon dioxide gas, and argon gas.

From the viewpoint of efficiently obtaining an effect of reducing hindrance to the polymerization, the O₂ concentration of the polymerization-inactive gas is preferably less than 20% (i.e., an environment where the oxygen concentration is lower than in the atmosphere), more preferably 0% or more and 15% or less, and even more preferably 0% or more and 5% or less. It is preferable that the gas replacement module 1 includes a temperature adjustment unit that adjusts the temperature, to realize stable conditions for promoting polymerization.

In the case of thermal polymerization, the polymerization portion 200 may be a heating device. The heating device is not particularly limited and can be appropriately selected according to a purpose. Examples of the heating device include, but are not limited to, a substrate heating unit (for example, a hot plate), an IR heater, and a hot air heater, and further, these unit may be combined.

The heating temperature, the time, and the light irradiation conditions can be appropriately selected in accordance with the polymerizable compound contained in the liquid composition 5A and the thickness of the film to be formed.

### - Removal Portion 300 -

As illustrated in FIG. 13, the removal portion 300 includes a heating device 3a and performs a liquid removal step in which the heating device 3a heats the porous resin precursor 5B formed by the polymerization portion 200, to dry and remove remaining liquid. Thus, it is possible to form a porous resin. The removal portion 300 may remove the liquid under reduced pressure.

The removal portion 300 performs a polymerization promotion step in which the heating device 3a heats the porous resin precursor 5B to further promote the polymerization reaction performed by the polymerization portion 200, and an initiator removal step in which the heating device 3a heats the porous resin precursor 5B to dry and remove photopolymerization initiator remaining in the porous resin precursor 5B. The polymerization promotion step and the initiator removal step may not be performed simultaneously with the liquid removal step and may be performed before or after the liquid removal step.

After the liquid removal step, the removal portion 300 performs a polymerization completion step of heating the porous material under reduced pressure. The heating device 3a is not particularly limited, as long as the heating device 3a satisfies the above-described functions. Examples of the heating device 3a include, but are not limited to, an IR heater and a hot air heater.

The heating temperature and the time can be appropriately selected in accordance with the boiling point of the liquid contained in the porous resin precursor 5B and the thickness of the film to be formed.

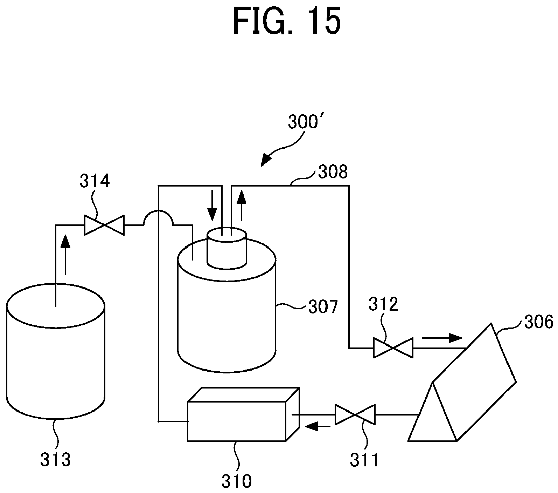

FIG. 15 is a schematic diagram illustrating another example of an application unit for use in an electrode forming apparatus for implementing an electrode forming method of the present embodiment.

A liquid discharge device 300' controls a pump 310 and valves 311 and 312 to circulate the liquid composition in a liquid discharge head 306, a tank 307, and a tube 308.

The liquid discharge device 300' includes an external tank 313. When the amount of the liquid composition in the tank 307 decreases, the liquid discharge device 300' controls the pump 310, the valves 311 and 312, and a valve 314 to supply the liquid composition from the external tank 313 to the tank 307.

By using the above-described electrode manufacturing apparatus, the liquid composition can be discharged to a targeted location of an object to which the liquid composition is to be applied.

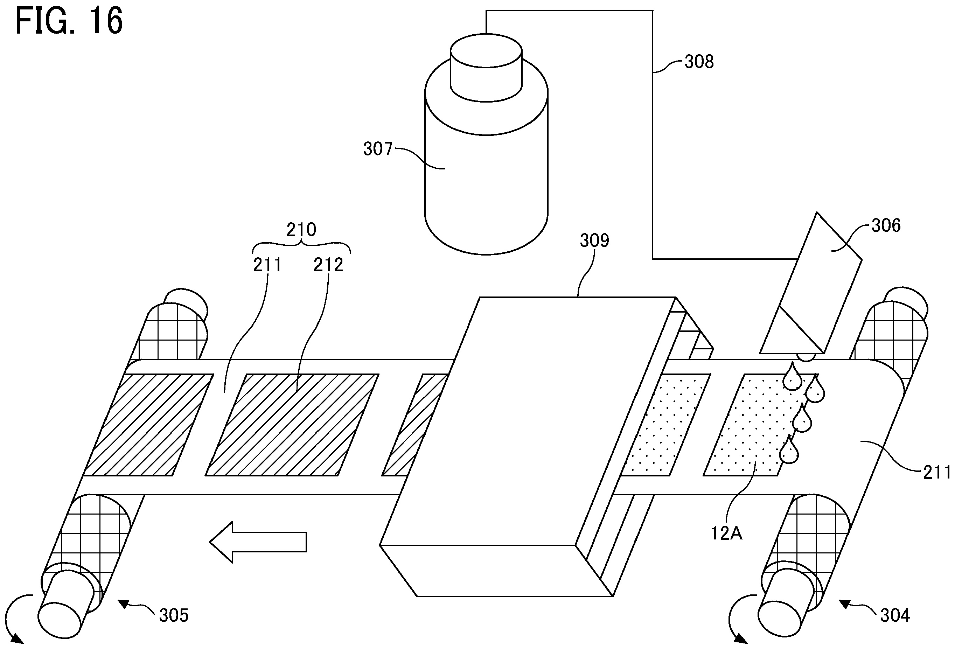

FIG. 16 is a schematic diagram illustrating an application unit for use in an electrode forming apparatus for implementing an electrode forming method according to an embodiment of the present invention.

The method of manufacturing a coated object 210 obtained by applying a porous resin onto a base material includes a step of sequentially discharging a liquid composition 12A onto a base material 211 by using the liquid discharge device 300'.

First, the base material 211 having an elongated shape is prepared. The base material 211 is wound around a cylindrical core and set on an unwinding roller 304 and a winding roller 305 so that a side on which a porous resin 212 is to be formed faces upward in FIG. 16. The unwinding roller 304 and the winding roller 305 rotate counterclockwise to convey the base material 211 from right to left in FIG. 16.

The liquid discharge head 306 disposed above the base material 211 between the unwinding roller 304 and the winding roller 305 discharges droplets of the liquid composition 12A onto the base material 211 being sequentially conveyed.

The liquid discharge head 306 may be provided as a plurality of liquid discharge heads 306 in a direction substantially parallel or substantially perpendicular to the conveyance direction of the base material 211. Next, the base material 211 onto which the droplets of the liquid composition 12A are discharged is conveyed to a polymerization portion 309 by the unwinding roller 304 and the winding roller 305. As a result, the porous resin 212 is formed, and a coated object 210 in which a porous resin is provided on a base material is obtained. Afterwards, the coated object 210 to which the porous resin is applied is cut into a desired size by punching or the like.

The polymerization portion 309 may be disposed either above or below the base material 211, or a plurality of polymerization portions 309 may be provided.

The polymerization portion 309 is not particularly limited, as long as the polymerization portion 309 does not directly contact the liquid composition 12A. Examples of the polymerization portion 309 include, but are not limited to, a resistance heater, an infrared heater, and a fan heater in the case of thermal polymerization, and an ultraviolet irradiation device in the case of photopolymerization. Note that the polymerization portion 309 may include a plurality of polymerization portions 309.

The conditions for heating or light irradiation are not particularly limited and can be appropriately selected according to a purpose. In the polymerization, the liquid composition 12A polymerizes to form a porous resin.

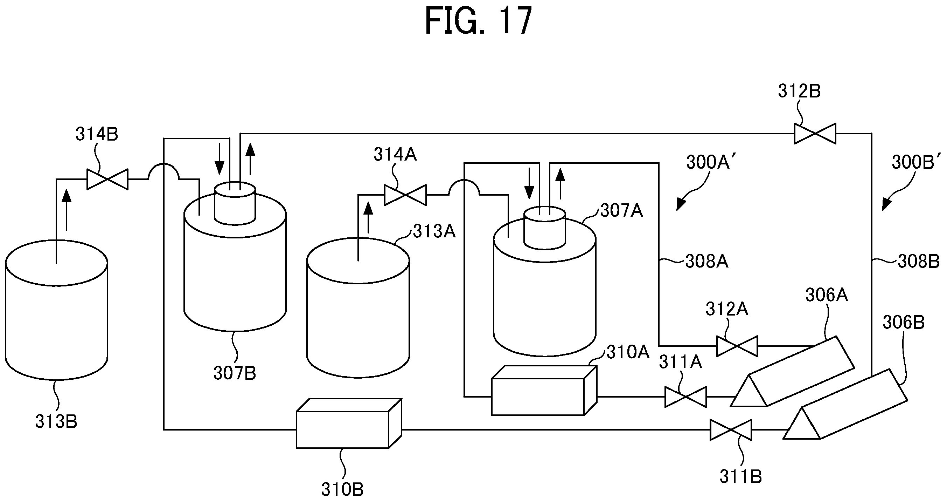

As illustrated in FIG. 17, a tank 307A may supply the liquid composition from a tank 313A connected to the tank 307A, and the liquid discharge head 306 may include a plurality of liquid discharge heads 306A and 306B.

### [Embodiment for Forming Porous Resin Layer by Indirect Application of Liquid Composition to Base Material]

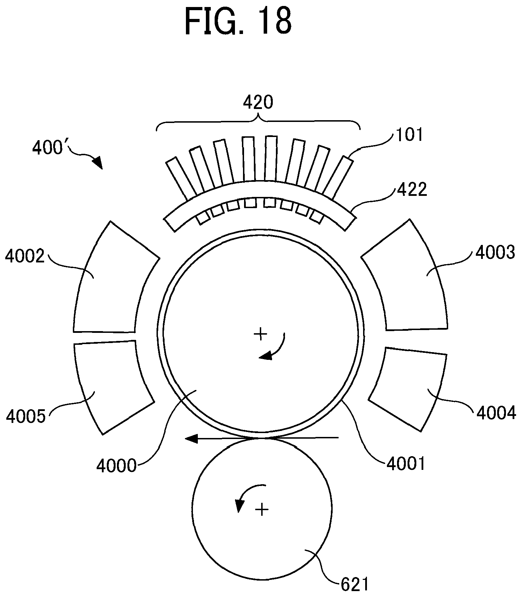

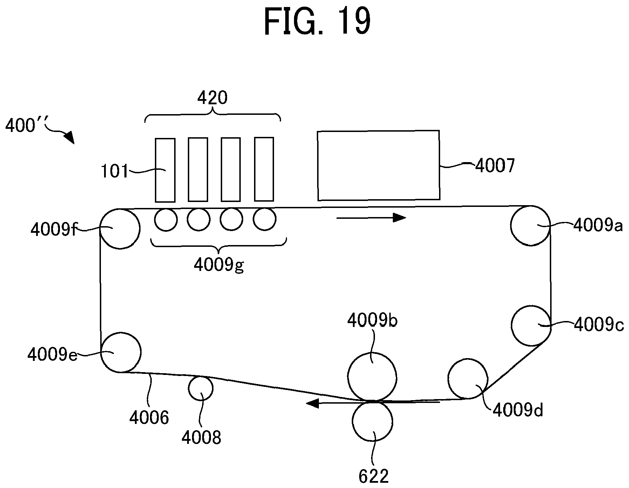

FIGs. 18 and 19 are configuration diagrams illustrating an example of a printing portion in which an inkjet method and a transfer method are adopted as application units in the electrode manufacturing apparatus of the present embodiment. FIG. 18 is a configuration diagram illustrating a printing portion using a drum-shaped intermediate transfer body. FIG. 19 is a configuration diagram illustrating a printing portion using an endless belt-type intermediate transfer body.

A printing portion 400' illustrated in FIG. 18 is an inkjet printer that forms a porous resin on a base material by transferring a liquid composition or a porous resin onto the base material via an intermediate transfer body 4001.

The printing portion 400' includes an inkjet portion 420, a transfer drum 4000, a preprocessing unit 4002, an absorption unit 4003, a heating unit 4004, and a cleaning unit 4005.

The inkjet portion 420 includes a head module 422 holding a plurality of heads 101. The heads 101 discharge a liquid composition onto the intermediate transfer body 4001 supported by the transfer drum 4000 to form a liquid composition layer on the intermediate transfer body 4001. Each of the heads 101 is a line head, and nozzles are arranged in a range covering the width of the recording area of the base material having a maximum usable size. The head 101 includes, on a lower surface thereof, a nozzle surface in which a nozzle is formed, and the nozzle surface faces the front surface of the intermediate transfer body 4001 with a small gap interposed therebetween. In the present embodiment, the intermediate transfer body 4001 is configured to circulate and move on a circular trajectory, and thus, the plurality of heads 101 are arranged radially.

The transfer drum 4000 faces an impression cylinder 621 and forms a transfer nip portion. For example, the preprocessing unit 4002 applies, onto the intermediate transfer body 4001, a reaction liquid to increase the viscosity of the liquid composition, before the heads 101 discharge the liquid composition. The absorption unit 4003 absorbs a liquid component from the liquid composition layer on the intermediate transfer body 4001 before transfer. The heating unit 4004 heats an ink layer on the intermediate transfer body 4001 before transfer. When the liquid composition layer is heated, the liquid composition polymerizes by thermal polymerization to form a porous resin. Further, liquid is removed from the liquid composition to improve the transferability to the base material. The cleaning unit 4005 cleans the intermediate transfer body 4001 after transfer to remove foreign substances such as ink and dust remaining on the intermediate transfer body 4001.

The outer peripheral surface of the impression cylinder 621 is in pressure contact with the intermediate transfer body 4001, and when the base material passes through the transfer nip portion between the impression cylinder 621 and the intermediate transfer body 4001, the porous resin on the intermediate transfer body 4001 is transferred to the base material. Note that the impression cylinder 621 may be configured to include, on an outer circumferential surface thereof, at least one grip mechanism for holding a tip end portion of the base material.

A printing portion 400" illustrated in FIG. 19 is an inkjet printer that forms a porous resin on a base material by transferring a liquid composition or a porous resin onto the base material via an intermediate transfer belt 4006.

The printing portion 400" discharges droplets of the liquid composition from the plurality of heads 101 provided in the inkjet portion 420 to form a liquid composition layer on an outer circumferential surface of the intermediate transfer belt 4006. The liquid composition layer formed on the intermediate transfer belt 4006 is heated by a heating unit 4007 and polymerizes by thermal polymerization to form a porous resin, which forms a film on the intermediate transfer belt 4006.

The porous resin forming a film on the intermediate transfer belt 4006 is transferred to the base material in the transfer nip portion where the intermediate transfer belt 4006 faces a transfer roller 622. After the porous resin is transferred, the surface of the intermediate transfer belt 4006 is cleaned by a cleaning roller 4008.

The intermediate transfer belt 4006 is spanned over a drive roller 4009a, a counter roller 4009b, a plurality of (four in the present example) shape-maintaining rollers 4009c, 4009d, 4009e, and 4009f, and a plurality of (four in the present example) support rollers 4009g, and moves in the direction of the arrows in FIG. 19. The support rollers 4009g are provided to face the heads 101 and maintain the intermediate transfer belt 4006 in a tension state when ink droplets are discharged from the heads 101.

### [First Embodiment]

### <Configuration Example of Gas Replacement Module 1>

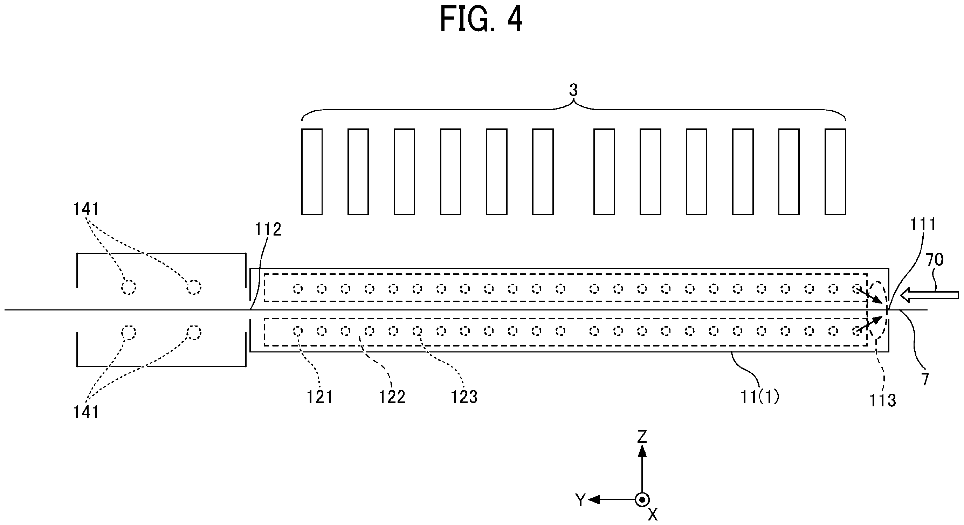

An example of the configuration of the gas replacement module 1 according to a first embodiment will be described with reference to FIGs. 3 and 4. FIG. 3 is a top view of the gas replacement module 1. FIG. 4 is a cross-sectional view taken along line IV-IV in FIG. 3. In FIGs. 3 and 4, the gas replacement module 1 and the irradiation unit 3 are illustrated.

The electrode manufacturing apparatus 100 uses the irradiation unit 3 to irradiate the liquid composition applied onto the base material 7, with ultraviolet rays from a light source at a predetermined intensity and for a predetermined time, to form a resin structure body including a porous resin layer. To efficiently form a desired porous layer, it is desirable to irradiate a wide area with ultraviolet rays having substantially uniform light intensity. Therefore, as illustrated in FIGs. 3 and 4, the electrode manufacturing apparatus 100 includes the multiple irradiation units 3 arranged along the conveyance direction 70 of the base material 7, and irradiates a wide area with ultraviolet rays having substantially uniform light intensity. The distance between the base material 7 and the irradiation units 3, the distance between adjacent ones of the irradiation units 3 in the conveyance direction 70, and the like are optimized in accordance with the directionality of the ultraviolet rays emitted by the irradiation units 3.

When a polymerizable compound is cured by irradiation with ultraviolet rays, oxygen present in the vicinity of the polymerizable compound to be cured may inhibit curing. Therefore, in the electrode manufacturing apparatus 100, the oxygen concentration in the first chamber 11 of the gas replacement module 1 is lowered to irradiate, with ultraviolet rays, the liquid composition on the base material 7 passing through the first chamber 11. This reduces a hindrance by oxygen during the curing of the liquid composition. At least a portion of the first chamber 11 facing the irradiation units 3 is formed of a material such as glass and resin, through which ultraviolet rays can pass.

The gas replacement module 1 uses the first gas supply unit 12 to supply a first gas S1 into the first chamber 11. The first gas supply unit 12 includes a first joint member 121, a tubular member 122, and a plurality of gas supply holes 123. The first gas supply unit 12 supplies the first gas S1 into the first chamber 11 via the first joint member 121, the tubular member 122, and the plurality of gas supply holes 123.

The gas replacement module 1 replaces the gas present inside the first chamber 11 with the first gas S1 supplied from the first gas supply unit 12, and thus, the oxygen concentration in the first chamber 11 decreases. Further, in the gas replacement module 1, the control unit 6 changes the internal pressure of the first chamber 11 by controlling the flow rate, the flow velocity, and the like of the first gas S1 supplied from the first gas supply unit 12. For example, an inert gas can be used as the first gas S1.

Examples of the inert gas include, but are not limited to, nitrogen gas and argon gas.

The oxygen concentration per unit area in the first chamber 11 is preferably 0.01% or less. Moreover, the oxygen content per unit area of the first gas S1 supplied from the first gas supply unit 12 is preferably 0.01% or less. When the oxygen content per unit area of the first gas S1 is 0.01% or less, the oxygen concentration per unit area in the first chamber 11 is 0.01% or less, and it is possible to reduce hindrance by oxygen during the curing of the liquid composition. Nitrogen gas cylinders having a nitrogen concentration per unit volume of 99.999% or more are readily available, and by using these gas cylinders, the oxygen content per unit volume in the first gas can be reduced to 0.01% or lower.

Each of a first opening 111 and a second opening 112 is a through hole communicating the inside and the outside of the first chamber 11. The base material 7 is inserted into the first chamber 11 via the first opening 111 and removed to the outside of the first chamber 11 via the second opening 112.

The shape of each of the first opening 111 and the second opening 112 in a plan view is preferably a substantially rectangular shape with the width direction 71 as a long side. By employing such a shape, the opening area can be decreased as much as possible, while the base material 7 can still pass through the first opening 111 and the second opening 112.

Moreover, while being conveyed, the base material 7 may flutter in the thickness direction or meander in the width direction 71. Accordingly, to prevent the first opening 111 and the second opening 112 from contacting the liquid composition on the base material 7 when the base material 7 passes through the first opening 111 and the second opening 112, it is preferable that the length of each of the first opening 111 and the second opening 112 in the width direction 71 is sufficiently longer than the length of the base material 7 in the width direction 71. Further, it is preferable that the length of each of the first opening 111 and the second opening 112 in the thickness direction of the base material 7 is sufficiently longer than the length of the thickness of the base material 7. However, the shape of each of the first opening 111 and the second opening 112 in a plan view is not limited to the above-described shape. The shape may be substantially elliptical or substantially polygonal, and the first opening 111 and the second opening 112 may have different shapes.

The gas replacement module 1 supplies a second gas S2 from the second gas supply unit 15 into the second chamber 14 via a second joint member 141. The second gas S2 is used to reduce air flowing into the first chamber from the first opening. For example, in the gas replacement module 1, the control unit 6 changes the internal pressure of the second chamber 14 by controlling the flow rate, the flow velocity, and the like of the second gas S2 supplied from the second gas supply unit 15.

Here, the first chamber 11 includes the first opening 111 and the second opening 112, and thus, oxygen may flow into the first chamber 11 via the first opening 111 and the second opening 112. In particular, at the first opening 111 into which the base material 7 is conveyed, the base material 7 tends to bring air into the first chamber 11 due to the effect of boundary layers, and thus, oxygen in the atmosphere may flow into the first chamber 11 from outside the first chamber 11, together with the base material 7 being conveyed.

In the present embodiment, the internal pressure of the first chamber 11 is higher than atmospheric pressure. Further, the internal pressure of the second chamber 14 is equal to or higher than atmospheric pressure and equal to or lower than the internal pressure of the first chamber 11. Thus, it is possible to reduce the inflow of air from the outside into the first chamber 11 via the first opening 111 or the second opening 112. Moreover, it is possible to reduce the amount of air that flows into the first chamber 11 together with the base material 7 being conveyed. Thus, it is possible to reduce the inflow of oxygen from the air into the first chamber 11.

For example, when the second gas S2 is supplied into the first chamber 11 to reduce the amount of air flowing into the first chamber 11, it is not possible to use a gas such as air containing oxygen as the second gas S2, and thus, the options for the second gas S2 are limited. By contrast, in the present embodiment, the internal pressure of the second chamber 14 is adjusted to reduce the air flowing into the first chamber 11, and thus, the second gas S2 may or may not be the same gas as the gas supplied to the first chamber 11. As a result, a gas such as air containing oxygen can be used as the second gas S2, and the options for the second gas S2 are widened. Thus, the present embodiment can provide a technique by which it is possible to widen the options for the second gas S2 used to reduce the amount of air flowing into the first chamber 11.

In the present embodiment, the second gas supply unit 15 may supply the second gas S2 in a direction along the surface of the base material 7 being conveyed by the conveyance unit 13. The surface of the base material 7 conveyed by the conveyance unit 13 corresponds to the surface along the XY-plane in FIGs. 3 and 4. For example, the direction along the surface of the base material 7 is a direction that is inclined by 10 degrees or less with respect to the surface of the base material 7. By supplying the second gas S2 in this direction, it is possible to reduce fluttering of the base material 7 caused by the supply of the second gas S2, as compared with a case of supplying the second gas S2 from a direction intersecting the surface of the base material 7 conveyed by the conveyance unit 13. By reducing the fluttering, it is possible to reduce the movement of the liquid composition applied onto the base material 7, so that the quality of an electrode manufactured by the electrode manufacturing apparatus 100 can be improved. However, the direction in which the second gas S2 is supplied is not limited to the direction along the surface of the base material 7, and can be appropriately changed. The direction in which the second gas S2 is supplied is preferably inclined by 45 degrees or less with respect to the surface of the base material 7, more preferably by 30 degrees or less, and even more preferably by 10 degrees or less, as described above. By choosing such an inclination, the movement of the liquid composition applied onto the base material 7 can be further reduced.

Further, in the present embodiment, the second gas supply unit 15 may supply air as the second gas S2. By supplying air by the second gas supply unit 15, the configuration of the gas replacement module 1 can be simplified and the cost of the gas replacement module 1 can be reduced. The second gas supply unit 15 may supply compressed air as the second gas S2. By supplying compressed air by the second gas supply unit 15, the internal pressure of the second chamber 14 can be easily adjusted.

In the present embodiment, the first gas supply unit 12 may supply at least a part of the first gas S1 into the first chamber 11 toward the base material 7 positioned at an upstream side of the conveyance direction 70 and in the vicinity of the first opening 111. Thereby, as illustrated in FIGs. 3 and 4, an air knife 113 can be formed in the vicinity of the first opening 111 by the first gas S1 supplied by the first gas supply unit 12. By forming the air knife 113, it is possible to reduce the amount of air flowing through the first opening 111 along with the base material 7 being conveyed.

When the conveyance speed of the base material 7 by the conveyance unit 13 is faster, the internal pressure of the second chamber 14 may be higher. Thus, the oxygen concentration inside the first chamber 11 can be adjusted to 0.01% or less per unit area, regardless of the conveyance speed of the base material 7.

### <Configuration Example of Control Unit 6>

### (Example of Hardware Configuration)

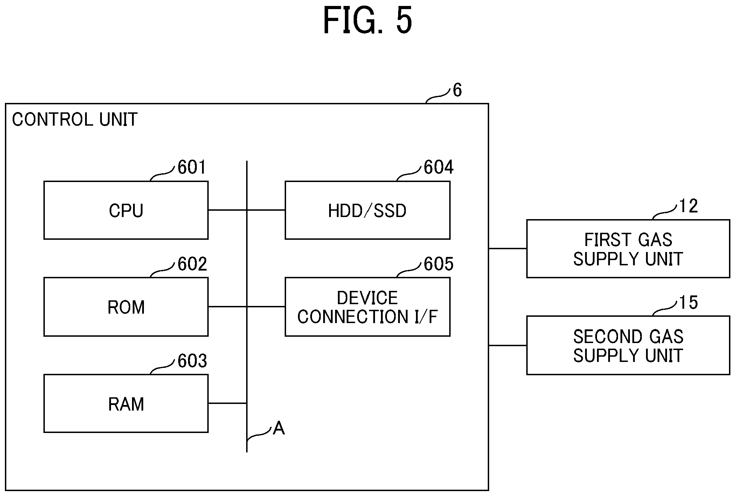

FIG. 5 is a block diagram illustrating an example of a hardware configuration of the control unit 6. The control unit 6 is constructed by a computer. The control unit 6 includes a Central Processing Unit (CPU) 601, a Read Only Memory (ROM) 602, and a Random Access Memory (RAM) 603. The control unit 6 also includes a Hard Disk Drive/Solid State Drive (HDD/SSD) 604 and a device connection Interface (I/F) 605. These components are connected via a system bus A so that these components can communicate with each other.

The CPU 601 executes a control process including various types of calculation processes. The ROM 602 stores a program used to drive the CPU 601, such as an Initial Program Loader (IPL). The RAM 603 is used as a work area for the CPU 601. The HDD/SSD 604 stores various types of information such as a program and the like.

The device connection I/F 605 is an interface for connecting the control unit 6 to various types of devices. Here, the devices include the first gas supply unit 12, the second gas supply unit 15, and the like.

Note that at least part of the functions implemented by the CPU 601 may be implemented by an electric circuit or an electronic circuit.

### (Example of Functional Configuration)

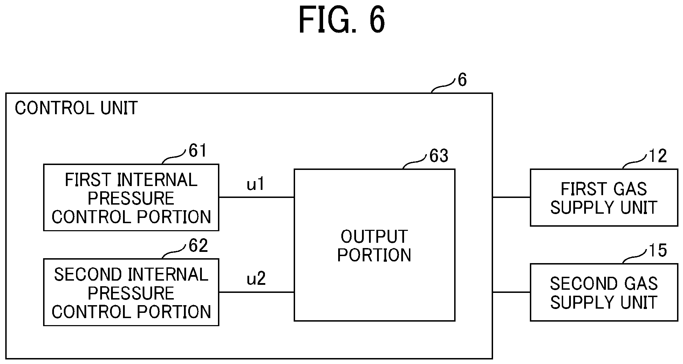

FIG. 6 is a block diagram illustrating an example of a functional configuration of the control unit 6. The control unit 6 includes a first internal pressure control portion 61, a second internal pressure control portion 62, and an output portion 63. Each function of the first internal pressure control portion 61 and the second internal pressure control portion 62 is implemented when a processor such as the CPU 601 in FIG. 5 executes a process specified by a program stored in a non-volatile memory such as the ROM 602. The function of the output portion 63 is implemented by a device connection I/F 605 illustrated in FIG. 5 and the like.

The first internal pressure control portion 61 outputs a first internal pressure control signal u1 to the first gas supply unit 12 via the output portion 63, and controls the internal pressure in the first chamber 11 by controlling the flow rate, the flow velocity, and the like of the first gas supplied from the first gas supply unit 12 to the first chamber 11.

The second internal pressure control portion 62 outputs a second flow rate control signal u2 to the second gas supply unit 15 via the output portion 63, and controls the internal pressure in the second chamber 14 by controlling the flow rate, the flow velocity, and the like of the second gas supplied from the second gas supply unit 15 to the second chamber 14.

### <Operation Example of Electrode Manufacturing Apparatus 100>

Next, an example of an operation by the electrode manufacturing apparatus 100 will be described.

### (Irradiation Step)

The irradiation step is a step of irradiating, with active energy rays, the liquid composition applied in the application step. The irradiation step increases the porosity of the porous resin that is finally produced, thereby improving the uptake of fluids, such as liquids and gases, in the porous resin, for example. Specifically, by irradiating the liquid composition with active energy rays, a porous precursor is formed that has a porous structure and serves as a basis for forming a porous resin having high porosity.

The active energy rays are not particularly limited, as long as the active energy rays can impart the desired energy for promoting the polymerization reaction of the polymerizable compound. Examples of the active energy rays include, but are not limited to, ultraviolet rays, electron beams, α-rays, β-rays, γ-rays, and X-rays. Among these active energy rays, ultraviolet rays are preferred. Note that, particularly when using a light source having high energy, the polymerization reaction can proceed without using a polymerization initiator.

The reason why a porous precursor is formed by the irradiation step will be explained. As described above, when a porous resin is formed by polymerization-induced phase separation, the structure, the properties, and the like of the porous resin change based on the polymerization conditions. For example, if a liquid composition is irradiated with active energy rays having high irradiation intensity to form a porous resin under conditions that promote the polymerization of the polymerizable compound, the polymerization proceeds before sufficient phase separation occurs, and it is difficult to manufacture a porous resin having high porosity. Therefore, in the irradiation step aimed at forming a porous precursor having a porous structure that serves as the basis for forming a porous resin having high porosity, the irradiation intensity of the emitted active energy rays is selected to be not too high.

Specifically, the irradiation intensity of the active energy rays is preferably 1 W/cm² or less, more preferably less than 300 mW/cm², and even more preferably 100 mW/cm² or less. However, if the irradiation intensity of the active energy rays is too low, phase separation proceeds excessively, and thus, the porous structure is likely to be uneven and coarse. Further, the irradiation time increases and the productivity decreases. Therefore, the irradiation intensity is preferably 10 mW/cm² or more, and more preferably 30 mW/cm² or more. When the irradiation step is performed while the liquid composition and the light source emitting the active energy rays move relative to each other, the irradiation intensity on the surface of the liquid composition changes continuously. In this case, the irradiation intensity expresses an average value of the irradiation intensity measured at a plurality of locations evenly (uniformly) selected from within the region where the irradiation step is executed.

The time during which the active energy rays are emitted in the irradiation step is preferably equal to or longer than a structure determination time for determining the porous structure that serves as the basis for forming the porous resin having high porosity. Further, it is preferable that the polymerization rate of the porous resin is 90% or more.

The structure determination time can be calculated by the following method using a liquid composition.

First, fine resin particles are uniformly dispersed on an alkali-free glass substrate by spin coating to form a gap agent. Subsequently, the substrate coated with the gap agent is bonded to an alkali-free glass substrate not coated with the gap agent, so that a surface coated with the gap agent is sandwiched therebetween. Next, the liquid composition is filled into a space between the bonded elements by utilizing capillary action, and the periphery of the substrate is finally sealed with a sealant, to prepare a "structure determination time measurement element". The conditions during the preparation are described below.
- Alkali-free glass substrate: OA-10G manufactured by Nippon Electric Glass Co., Ltd., 40 mm, t = 0.7 mm
- Gap agent: fine resin particles MICROPEARL GS-L100, average particle size 100 µm, manufactured by Sekisui Chemical Co., Ltd.
- Spin coating conditions: dispersion liquid dropping amount 150 µL, rotation speed 1000 rpm, rotation time 30 s
- Amount of liquid composition being filled: 160 µL
- Sealant: TB3035B (manufactured by Three Bond Co., Ltd.)

Next, the prepared structure determination time measurement element is irradiated with active energy rays under the same conditions as in the irradiation step. The transmittance of the element before irradiation is used as a reference to measure the attenuation of the measurement value (transmittance) of the element during irradiation. In the calculation of the attenuation rate, when active energy rays are excessively emitted so that there is no change due to attenuation, the transmittance is defined as 100%. The attenuation rate increases as more porous structures are formed by polymerization. In the present disclosure, the structure determination time is defined as the time from the start of irradiation until the attenuation rate of the transmittance reaches 50%. A device used in the measurement is described below.
- Transmittance measurement device: LCD-5200, manufactured by Otsuka Electronics Co., Ltd.

### (Removal Step)

The removal step is a step of removing the solvent from the porous resin after the irradiation step. A method of removing the solvent is not particularly limited, and examples thereof include, but are not limited to, a method of removing the solvent from the porous resin by heating. At this time, heating under reduced pressure is preferable, because this further promotes the removal of the solvent and can suppress residual solvent in the porous resin.

### <Data Example>

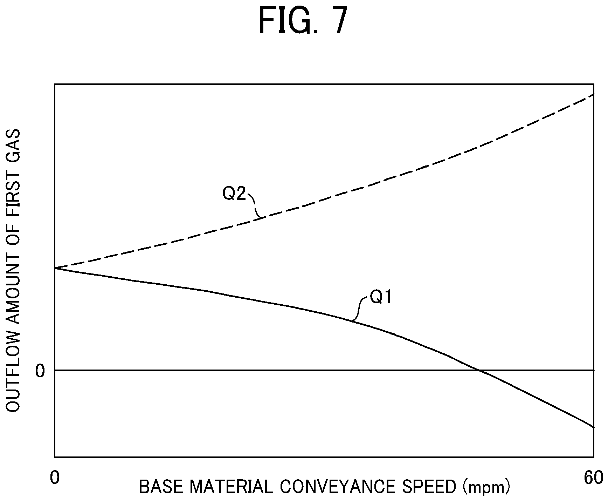

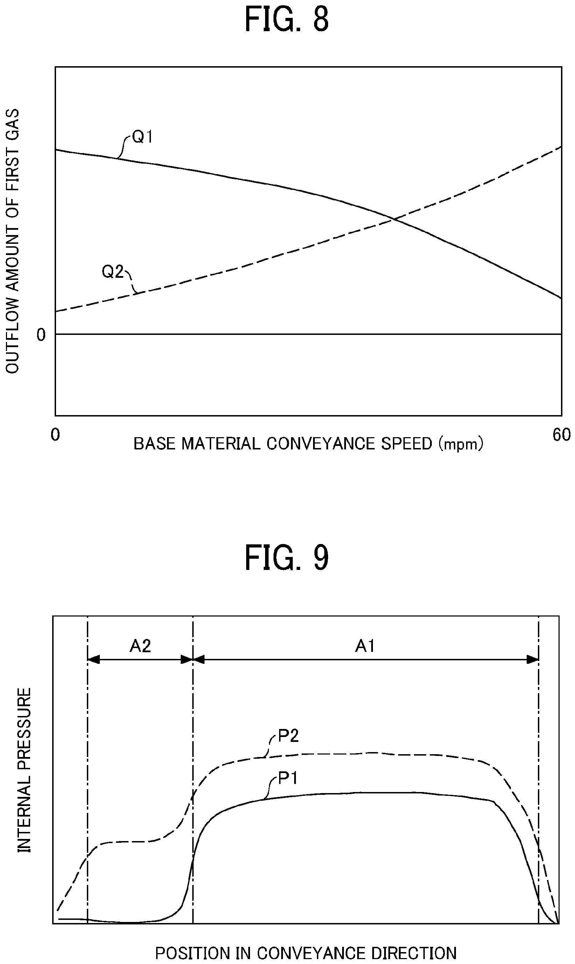

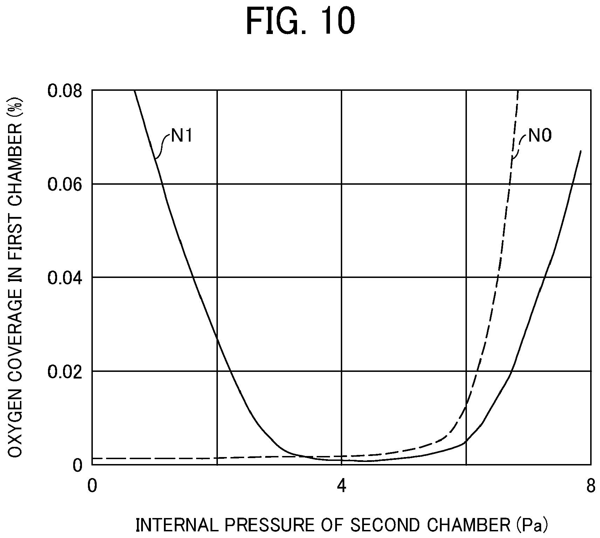

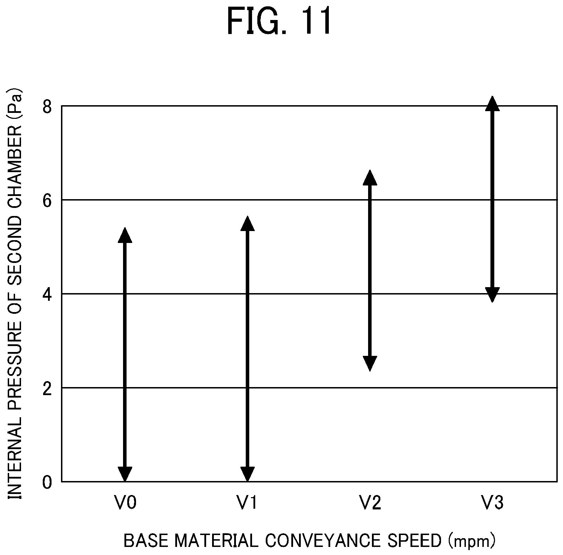

Various data in the electrode manufacturing apparatus 100 will be described with reference to FIGs. 7 to 11. FIG. 7 is a first graph illustrating a relationship between the conveyance speed of the base material 7 and the outflow amount of the first gas. FIG. 8 is a second graph illustrating a relationship between the conveyance speed of the base material 7 and the outflow amount of the first gas. FIG. 9 is a graph illustrating internal pressures in the first chamber 11 and the second chamber 14 in the state of FIG. 8. FIG. 10 is a graph illustrating a relationship between the internal pressure of the second chamber 14 and the oxygen concentration of the first chamber 11. FIG. 11 is a graph illustrating a relationship between the conveyance speed of the base material 7 and the internal pressure of the second chamber 14.

In FIG. 7, an outflow amount Q1 indicates an outflow amount of the first gas flowing from the inside of the first chamber 11 to the outside of the first chamber 11 through the first opening 111. An outflow amount Q2 indicates the outflow amount of the first gas flowing from the inside of the first chamber 11 to the outside of the first chamber 11 through the second opening 112.

As illustrated in FIG. 7, when the conveyance speed of the base material 7 is higher, the outflow amount Q1 from the first opening 111 decreases and the outflow amount Q2 from the second opening 112 increases. When the conveyance speed of the base material 7 is faster, the difference between the outflow amount Q1 and the outflow amount Q2 increases. Further, when the conveyance speed of the base material 7 is faster than a predetermined conveyance speed, the outflow amount Q1 takes a negative value. When the outflow amount Q1 takes a negative value, air flows into the first chamber 11, and the oxygen concentration within the first chamber 11 increases.

In contrast to the above, if the outflow amount Q1 of the first gas from the first opening 111 is preset to a greater value than the outflow amount Q2 of the first gas from the second opening 112, as illustrated in FIG. 8, even when the conveyance speed of the base material 7 is 0 meter per minutes (mpm), that is, when the base material 7 is stopped, or when the conveyance speed of the base material 7 is 60 mpm, both the outflow amount Q1 and the outflow amount Q2 have positive values. That is, it is possible to prevent air from flowing into the first chamber 11 and to prevent oxygen from flowing into the first chamber 11.

In the present embodiment, the second chamber 14 is arranged on a downstream side of the second opening 112 in the conveyance direction 70, and the internal pressure of the second chamber 14 is set to be equal to or higher than atmospheric pressure and equal to or lower than the internal pressure of the first chamber 11. Thus, the state illustrated in FIG. 8 can be obtained.

In FIG. 9, an area A1 is an area corresponding to the first chamber 11 in the conveyance direction 70. An area A2 is an area corresponding to the second chamber 14 in the conveyance direction 70. An internal pressure P1 indicates the internal pressure when the second chamber 14 is not present on a downstream side of the second opening 112 in the conveyance direction 70. An internal pressure P2 indicates the internal pressure when the second chamber 14 is present on the downstream side of the second opening 112 in the conveyance direction 70.

As illustrated in FIG. 9, when the second chamber 14 is present on the downstream side of the second opening 112 in the conveyance direction 70, the internal pressure increases to P2. The reason therefor is considered to be the reduction of the outflow of the first gas from the second opening 112. As the internal pressure increases to P2, the outflow amount of the first gas from the first opening 111 increases.

In FIG. 10, the horizontal axis indicates the internal pressure of the second chamber 14. The vertical axis indicates the oxygen concentration ratio (%) per unit volume within the first chamber 11. An oxygen concentration N0 indicates the oxygen concentration when the base material 7 is stopped. An oxygen concentration N1 indicates the oxygen concentration when the base material 7 is being conveyed at 60 mpm. Note that atmospheric pressure is set to 0 Pa, which is used as a standard, and the internal pressure of the first chamber 11 is 6 Pa.

As illustrated in FIG. 10, when the internal pressure of the second chamber 14 is low, the oxygen concentration N0 when the base material 7 is stopped is 0.01% or less. On the other hand, the oxygen concentration N1 when the base material 7 is conveyed at 60 mpm greatly exceeds 0.01%. When the internal pressure of the second chamber 14 is 3 Pa or higher, the oxygen concentration N1 can be set to 0.01% or lower, even when the base material 7 is being conveyed at 60 mpm. However, when the internal pressure of the second chamber 14 is increased to 6 Pa or more, the oxygen concentration N1 again exceeds 0.01%. The reason therefor is considered to be that the internal pressure of the second chamber 14 exceeds the internal pressure of the first chamber 11 and oxygen flows from the second chamber 14 into the first chamber 11. From the above, the range in which the internal pressure of the second chamber 14 is 3 Pa or more and 6 Pa or less is suitable as a range in which the oxygen concentration of the first chamber 11 can be maintained at 0.01% or less. By controlling the internal pressure P2 of the second chamber 14, the oxygen concentration within the first chamber 11 can be set to 0.01% or less per unit volume.

As illustrated in FIG. 7, when the conveyance speed of the base material 7 is faster, the outflow amount Q1 of the first gas from the first opening 111 decreases and the outflow amount Q2 of the first gas from the second opening 112 increases. Considering that the conditions in which the outflow amount Q1 and the outflow amount Q2 are substantially equal are conditions in which the inflow of oxygen into the first chamber 11 can be most reduced, it is preferable to increase the outflow amount of the first gas from the first opening 111 as the conveyance speed of the base material 7 increases. In other words, it is preferable to increase the internal pressure of the second chamber 14. As described above, the range of the internal pressure of the second chamber 14 in which the oxygen concentration per unit area in the first chamber 11 can be 0.01% or less differs depending on the conveyance speed of the base material 7.

FIG. 11 is a graph indicating the ranges of internal pressure in the second chamber 14 at which it is possible to reduce the oxygen concentration per unit area in the first chamber 11 to 0.01% or less for each conveyance speed of the base material 7. As illustrated in FIG. 11, it is preferable that the internal pressure of the second chamber 14 is higher as the conveyance speed of the base material 7 increases.

### [Second Embodiment]

Next, an electrode manufacturing apparatus according to a second embodiment will be described. Note that the same names and reference numerals as those in the above-described embodiment indicate the same or equivalent members or constituent portions, and detailed description thereof will be omitted as appropriate.

In the present embodiment, the electrode manufacturing apparatus includes at least one of a first pressure gauge that measures the internal pressure of the first chamber and an oxygen concentration gauge that measures the oxygen concentration inside the first chamber, a second pressure gauge that measures the internal pressure of the second chamber, and a control unit that controls the internal pressure in each of the first chamber and the second chamber. Further, the electrode manufacturing apparatus includes control unit that controls the internal pressure in the first chamber in accordance with a measurement result from at least one of the first pressure gauge and the oxygen concentration gauge, and controls the internal pressure in the second chamber in accordance with a measurement result from the second pressure gauge. These points differ from the first embodiment.

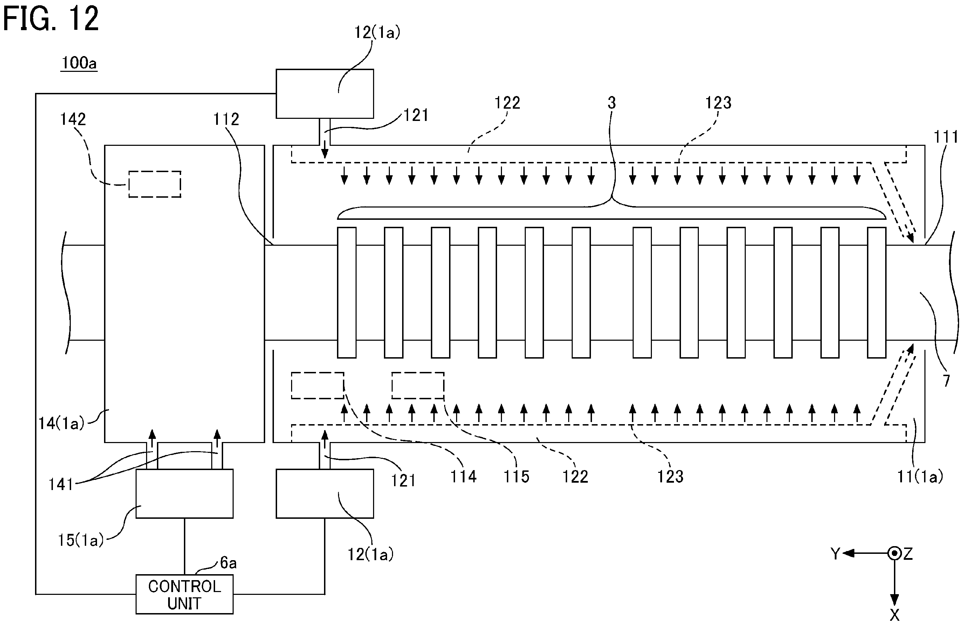

FIG. 12 is a top view of a gas replacement module 1a according to the second embodiment. As illustrated in FIG. 12, an electrode manufacturing apparatus 100a includes the gas replacement module 1a and a control unit 6a. The gas replacement module 1a includes a first pressure gauge 114, an oxygen concentration gauge 115, and a second pressure gauge 142.

The first pressure gauge 114 measures the internal pressure of the first chamber 11. The oxygen concentration gauge 115 measures the oxygen concentration inside the first chamber 11. The first pressure gauge 114 and the oxygen concentration gauge 115 are arranged inside the first chamber 11, for example.

The second pressure gauge 142 measures the internal pressure of the second chamber 14. The second pressure gauge 142 is arranged inside the second chamber 14, for example.

The control unit 6a controls the internal pressure in the first chamber 11 in accordance with a measurement result from at least one of the first pressure gauge 114 and the oxygen concentration gauge 115, and controls the internal pressure in the second chamber 14 in accordance with a measurement result from the second pressure gauge 142.

By adopting the above-described configuration, the electrode manufacturing apparatus 100a can control the internal pressure of each of the first chamber 11 and the second chamber 14 with high precision, and appropriately reduce the air flowing into the first chamber. Other effects are substantially the same as those of the first embodiment.

The embodiments have been described above, however, the present disclosure is not limited to the specifically disclosed embodiments described above, and various modifications and changes can be made without departing from the scope of the claims.

Numerical values such as ordinal numbers and quantities used in the description of the embodiments are all expressing examples to specifically describe the technology of the present disclosure, and the present disclosure is not limited to the mentioned numbers. Further, a connection relationship between constituent elements is described as an example to specifically describe the technology of the present disclosure, and the connection relationship for realizing the functions of the present disclosure are not limited thereto.

Each function of the embodiments described above can be realized by one processing circuit or a plurality of processing circuits. Here, the term "processing circuit" as used herein includes devices such as a processor programmed to execute each function by software, such as a processor implemented by an electronic circuit, or an Application Specific Integrated Circuit (ASIC), a digital signal processor (DSP), and a field programmable gate array (FPGA) designed to execute each function described above, and a conventional circuit module.

Aspects of the present disclosure include the following, for example.

According to a first aspect, an electrode forming apparatus includes: a first chamber including a first opening and a second opening, gas present in the first chamber being replaceable with a first gas; a first gas supply unit to supply the first gas into the first chamber; a conveyance unit to convey a base material to insert the base material into the first chamber via the first opening and remove the base material from the first chamber via the second opening; a second chamber on a downstream side of the first chamber in a conveyance direction in which the base material is conveyed by the conveyance unit; and a second gas supply unit to supply a second gas into the second chamber, in which an internal pressure of the second chamber is equal to or higher than atmospheric pressure and equal to or lower than an internal pressure of the first chamber.

According to a second aspect, in the electrode forming apparatus according to the first aspect, the second gas supply unit supplies the second gas in a direction along a surface of the base material conveyed by the conveyance unit.

According to a third aspect, in the electrode forming apparatus according to the first aspect or the second aspect, the second gas is air.

According to a fourth aspect, in the electrode forming apparatus according to any one of the first to third aspects, the first gas supply unit supplies at least a part of the first gas supplied into the first chamber toward the base material positioned at an upstream side of the conveyance direction and in the vicinity of the first opening.

According to a fifth aspect, in the electrode forming apparatus according to any one of the first to fourth aspects, an oxygen content per unit area of the first gas supplied into the first chamber by the first gas supply unit is 0.01% or less.

According to a sixth aspect, in the electrode forming apparatus according to any one of the first to fifth aspects, the internal pressure of the second chamber increases as the conveyance speed of the base material by the conveyance unit increases.

According to a seventh aspect, a resin structure body manufacturing apparatus includes a gas replacement module, an application unit to apply a liquid composition including a polymerizable compound onto the base material, and an irradiation unit to irradiate, with active energy rays, the liquid composition applied onto the base material by the application unit, the gas replacement module includes a first chamber including a first opening and a second opening, gas present in the first chamber being replaceable with a first gas, a first gas supply unit to supply the first gas into the first chamber, a second chamber on a downstream side of the first chamber in a conveyance direction in which the base material is conveyed by a conveyance unit to be inserted into the first chamber via the first opening and removed from the first chamber via the second opening, and a second gas supply unit to supply a second gas into the second chamber, in which an internal pressure of the second chamber is equal to or higher than atmospheric pressure and equal to or lower than an internal pressure of the first chamber, and after the application unit applies the liquid composition, the irradiation unit irradiates, with active energy rays, the liquid composition on the base material being conveyed in the first chamber, to form a resin structure body.

According to an eighth aspect, the resin structure body manufacturing apparatus according to the seventh aspect further includes a sucking unit to suck in at least a part of gas released from the second chamber.

According to a ninth aspect, the resin structure body manufacturing apparatus according to the eighth aspect further includes a heating unit to heat the liquid composition applied onto the base material by the application unit, in which the sucking unit is disposed on a downstream side of the second chamber in the conveyance direction of the conveyance unit.

According to a tenth aspect, in the resin structure body manufacturing apparatus according to the seventh aspect, the resin structure body includes a porous resin layer.

According to an eleventh aspect, the resin structure body manufacturing apparatus according to the seventh aspect further includes at least one of a first pressure gauge to measure the internal pressure of the first chamber and an oxygen concentration gauge to measure an oxygen concentration inside the first chamber, a second pressure gauge to measure the internal pressure of the second chamber, and a control unit to control the internal pressure of the first chamber in accordance with a measurement result from the at least one of the first pressure gauge and the oxygen concentration gauge, and control the internal pressure of the second chamber in accordance with a measurement result from the second pressure gauge.

According to a twelfth aspect, in an electrode forming method according to the twelfth aspect includes: supplying a first gas by a first gas supply unit into a first chamber including a first opening and a second opening, gas present in the first chamber being replaceable with the first gas; conveying, by a conveyance unit, a base material to insert the base material into the first chamber via the first opening and remove the base material from the first chamber via the second opening; and supplying, by a second gas supply unit, a second gas into a second chamber, the second chamber on a downstream side of the first chamber in a conveyance direction in which the base material is conveyed by the conveyance unit, in which an internal pressure of the second chamber is equal to or higher than atmospheric pressure and equal to or lower than an internal pressure of the first chamber.

According to a thirteenth aspect, in a resin structure body manufacturing method according to the thirteenth aspects includes: performing the electrode forming method according to claim 12; applying a liquid composition including a polymerizable compound, onto the base material by an application unit; and irradiating the liquid composition on the base material applied by the application unit, with active energy rays by an irradiation unit, in which the application unit is disposed on an upstream side of the first chamber in a conveyance direction in which the base material is conveyed by the conveyance unit, and the irradiation unit irradiates, with active energy rays, the liquid composition on the base material being conveyed in the first chamber after the application unit applies the liquid composition.

Any one of the above-described operations may be performed in various other ways, for example, in an order different from the one described above.

## Claims

1. An electrode forming apparatus (100; 100a), comprising:
a first chamber (11) including a first opening (111) and a second opening (112), gas present in the first chamber (11) being replaceable with a first gas (S1);
a first gas supply unit (12) to supply the first gas (S1) into the first chamber (11);
a conveyance unit (13) to convey a base material (7) to insert the base material (7) into the first chamber (11) via the first opening (111) and remove the base material (7) from the first chamber (11) via the second opening (112);
a second chamber (14) on a downstream side of the first chamber (11) in a conveyance direction in which the base material (7) is conveyed by the conveyance unit (13); and
a second gas supply unit (15) to supply a second gas (S2) into the second chamber (14), wherein
an internal pressure of the second chamber (14) is equal to or higher than atmospheric pressure and equal to or lower than an internal pressure of the first chamber (11).

2. The electrode forming apparatus (100; 100a) according to claim 1, wherein the second gas supply unit (15) supplies the second gas (S2) in a direction along a surface of the base material (7) conveyed by the conveyance unit (13).

3. The electrode forming apparatus (100; 100a) according to claim 1 or 2, wherein the second gas (S2) is air.

4. The electrode forming apparatus (100; 100a) according to any one of claims 1 to 3, wherein the first gas supply unit (12) supplies at least a part of the first gas (S1) supplied into the first chamber (11) toward the base material (7) positioned at an upstream side of the conveyance direction and in a vicinity of the first opening (111).

5. The electrode forming apparatus (100; 100a) according to any one of claims 1 to 4, wherein an oxygen content per unit area of the first gas (S1) supplied into the first chamber (11) by the first gas supply unit (12) is 0.01% or less.

6. The electrode forming apparatus (100; 100a) according to any one of claims 1 o 5, wherein the internal pressure of the second chamber (14) increases as a conveyance speed of the base material (7) by the conveyance unit (13) increases.

7. A resin structure body manufacturing apparatus (100; 100a), comprising:
a gas replacement module (1; 1a);
an application unit (2) to apply a liquid composition including a polymerizable compound onto a base material (7); and
an irradiation unit (3) to irradiate, with active energy rays, the liquid composition applied onto the base material (7) by the application unit (2),
the gas replacement module (1; 1a) including:
a first chamber (11) including a first opening (111) and a second opening (112), gas present in the first chamber (11) being replaceable with a first gas (S1);
a first gas supply unit (12) to supply the first gas (S1) into the first chamber (11);
a second chamber (14) on a downstream side of the first chamber (11) in a conveyance direction in which the base material (7) is conveyed by a conveyance unit (13) to be inserted into the first chamber (11) via the first opening (111) and removed from the first chamber (11) via the second opening (112); and
a second gas supply unit (15) to supply a second gas (S2) into the second chamber (14), wherein
an internal pressure of the second chamber (14) is equal to or higher than atmospheric pressure and equal to or lower than an internal pressure of the first chamber (11), and
after the application unit (2) applies the liquid composition, the irradiation unit (3) irradiates, with active energy rays, the liquid composition on the base material (7) being conveyed in the first chamber (11), to form a resin structure body.

8. The resin structure body manufacturing apparatus (100; 100a) according to claim 7, further comprising a sucking unit (40) to suck in at least a part of gas released from the second chamber (14).

9. The resin structure body manufacturing apparatus (100; 100a) according to claim 8, further comprising a heating unit (4) to heat the liquid composition applied onto the base material (7) by the application unit (2),
wherein the sucking unit (40) is disposed on a downstream side of the second chamber (14) in the conveyance direction of the conveyance unit (13).

10. The resin structure body manufacturing apparatus (100; 100a) according to claim 7, wherein the resin structure body includes a porous resin layer.

11. The resin structure body manufacturing apparatus (100a) according to claim 7, further comprising:
at least one of a first pressure gauge (114) to measure the internal pressure of the first chamber (11) and an oxygen concentration gauge (115) to measure an oxygen concentration inside the first chamber (11);
a second pressure gauge (142) to measure the internal pressure of the second chamber (14); and
a control unit (6a) to control the internal pressure of the first chamber (11) in accordance with a measurement result from the at least one of the first pressure gauge (114) and the oxygen concentration gauge (115), and control the internal pressure of the second chamber (14) in accordance with a measurement result from the second pressure gauge (142).

12. An electrode forming method comprising:
supplying a first gas (S1) by a first gas supply unit (12) into a first chamber (11) including a first opening (111) and a second opening (112), gas present in the first chamber (11) being replaceable with the first gas (S1),
conveying, by a conveyance unit (13), a base material (7) to insert the base material (7) into the first chamber (11) via the first opening (111) and remove the base material (7) from the first chamber (11) via the second opening (112), and
supplying, by a second gas supply unit (15), a second gas (S2) into a second chamber (14), the second chamber (14) on a downstream side of the first chamber (11) in a conveyance direction in which the base material (7) is conveyed by the conveyance unit (13), wherein
an internal pressure of the second chamber (14) is equal to or higher than atmospheric pressure and equal to or lower than an internal pressure of the first chamber (11).

13. A resin structure body manufacturing method comprising:
performing the electrode forming method according to claim 12;
applying a liquid composition including a polymerizable compound, onto the base material (7) by an application unit (2); and
irradiating the liquid composition on the base material (7) applied by the application unit (2), with active energy rays by an irradiation unit (3), wherein
the application unit (2) is disposed on an upstream side of the first chamber (11) in a conveyance direction in which the base material (7) is conveyed by the conveyance unit (13), and
the irradiation unit (3) irradiates, with active energy rays, the liquid composition on the base material (7) being conveyed in the first chamber (11) after the application unit (2) applies the liquid composition.
